# EUROPEAN PATENT SPECIFICATION

(11) **EP 2 727 962 B1**
(45) Date of publication and mention of the grant of the patent: **15.04.2015**
(21) Application number: 12805295.8
(22) Date of filing: 20.06.2012
(51) Int. Cl.: C08L 67/04, C08K 3/22, C08K 3/40, C08K 5/49, C08K 5/54, C08L 101/00, C08L 101/16

(54) **THERMOPLASTIC RESIN COMPOSITION AND MOLDED ARTICLE COMPRISING SAME**
THERMOPLASTISCHE HARZZUSAMMENSETZUNG UND FORMARTIKEL DAMIT
COMPOSITION DE RÉSINE THERMOPLASTIQUE ET ARTICLE MOULÉ COMPRENANT CELLE-CI

(30) Priority: 29.06.2011 JP 2011143861
(43) Date of publication of application: 07.05.2014
(73) Proprietor: Toray Industries, Inc., Tokyo, 103-8666 (JP)
(72) Inventor: ONOUE, Yosuke, Nagoya-shi Aichi 455-8502 (JP); SATO, Daisuke, Nagoya-shi Aichi 455- 8502 (JP); KUMAZAWA, Sadanori, Nagoya-shi Aichi 455-8502 (JP)
(74) Representative: Webster, Jeremy Mark
(86) International application number: PCT/JP2012/004006
(87) International publication number: WO 2013/001750

(56) References cited:
- WO-A1-2009/130904
- WO-A1-2010/044413
- JP-A- 6 049 305
- JP-A- 6 049 306
- JP-A- 2001 098 144
- JP-A- 2002 241 587
- JP-A- 2011 068 725
- DATABASE WPI Week 201048 Thomson Scientific, London, GB; AN 2010-H71793 XP002724813, & CN 101 724 236 A (BYD CO LTD) 9 June 2010 (2010-06-09)

## Description

### Technical Field

The present invention relates to a thermoplastic resin composition having excellent heat resistance, excellent molding processability and excellent impact resistance and especially having excellent flame retardancy, as well as to a molded product made thereof.

### Background Art

A polylactic acid resin has a high melting point and melting moldability and is thus expected as a practically good biodegradable polymer. The polylactic acid resin is also expected to be used as a general-purpose polymer produced from a biomass raw material in the future, and molding the polylactic acid resin by, for example, injection molding or extrusion molding has been expanding its use as molded products. The polylactic acid resin is also a thermoplastic resin that places little load on the environment. In order to apply the polylactic acid resin to electric and electronic equipment components and OA equipment components, however, it has been demanded to significantly improve the flame retardancy, as well as improving the heat resistance, the molding processability and the impact resistance.

As a technique of improving the flame retardancy of the thermoplastic resin, for example, Patent Document 1 discloses a composition that contains a biodegradable organic high-molecular compound, a flame retarding additive and a hydrolysis inhibitor and has the biodegradability, the flame retardancy and the mechanical strength. Additionally, Patent Document 2 discloses a biodegradable resin composition that contains a biodegradable resin and glass fibers having the softening temperature of not higher than 600°C and has improved surface scratch resistance of a resin molded product, and a biodegradable resin molded product. The invention described in Patent Document 1 and the invention described in Patent Document 2, however, have the problems: the insufficient effect of improving the flame retardancy of the polylactic acid resin and additionally the difficulty in sufficiently improving the heat resistance, the molding processability and the impact resistance.

Patent Document 3 discloses a thermoplastic resin composition comprising a polylactic acid resin and a low melting point glass powder

### Prior Art Documents

### Patent Documents

Patent Document 1: JP 2003-192929A (pages 1 and 2, Embodiments)
Patent Document 2: JP 2011-068725A (pages 1 and 2, Embodiments)
Patent Document 3: CN 101724236

### Summary of the Invention

### Problems to be Solved by the Invention

Embodiments of the invention aim to improve the heat resistance, the molding processability and the impact resistance of the thermoplastic resin including the polylactic acid resin, which is the problem of the prior art described above, and provide a thermoplastic resin composition especially having excellent flame retardancy and a molded produce made of the same.

### Means for Solving the Problems

As the result of intensive studies in order to solve the problems described above, the developers of the embodiments of the invention have solved the above problems and have completed the embodiments of the invention by mixing a flame retardant with a thermoplastic resin composition including a polylactic acid resin and further adding low melting point glass powder having a specific particle diameter and a specific softening temperature. In other words, the embodiments of the invention are made to solve at least part of the above problems, and the embodiments of the embodiments of the invention may include at least part of the following configurations.
(1) There is provided a thermoplastic resin composition, comprising:
   100 parts by weight of a thermoplastic resin including a polylactic acid resin (A);
   10 to 50 parts by weight of a flame retardant (B); and
   1 to 20 parts by weight of low melting point glass powder (C) having a median diameter (D50) in particle size distribution measurement of not greater than 6 µm and a softening temperature of not higher than 600°C.
(2) There is provided the thermoplastic resin composition described in (1), wherein the flame retardant (B) is at least one flame retardant selected among metal hydroxides and phosphorus-based flame retardants.
(3) There is provided the thermoplastic resin composition described in (2), wherein the metal hydroxide is at least one selected among aluminum hydroxide, magnesium hydroxide and calcium hydroxide.
(4) There is provided the thermoplastic resin composition described in (3), wherein the metal hydroxide is aluminum hydroxide.
(5) There is provided the thermoplastic resin composition described in any of (1) to (4), wherein a mixing ratio of the flame retardant (B) to the low melting point glass powder (C) (flame retardant (B) / low melting point glass powder (C)) is 60/40 to 90/10 in weight ratio.
   The weight ratio of the flame retardant (B) to the low melting point glass powder (C) may, however, be a ratio other than 60/40 to 90/10.
(6) There is provided the thermoplastic resin composition described in any of (1) to (5), further comprising: 0.01 to 50 parts by weight of a crystal nucleating agent (D) relative to 100 parts by weight of the thermoplastic resin including the polylactic acid resin (A).
   The content of the nucleating agent (D) may, however, be less than 0.01 parts by weight or may be greater than 50 parts by weight.
(7) There is provided the thermoplastic resin composition described in any of (1) to (6), further comprising: 0.1 to 50 parts by weight of a plasticizer (E) relative to 100 parts by weight of the thermoplastic resin including the polylactic acid resin (A).
   The content of the plasticizer (E) may, however, be less than 0.1 parts by weight or may be greater than 50 parts by weight.
(8) There is provided the thermoplastic resin composition described in any of (1) to (7), further comprising: 0.1 to 10 parts by weight of a silane coupling agent (F) relative to 100 parts by weight of the thermoplastic resin including the polylactic acid resin (A).
   The content of the silane coupling agent (F) may, however, be less than 0.1 parts by weight or may be greater than 10 parts by weight.
(9) There is provided the thermoplastic resin composition described in (8), wherein the silane coupling agent (F) is an epoxy silane coupling agent.
(10) A molded product produced by molding the thermoplastic resin composition described in any of (1) to (9).

### Advantageous Effects of the Invention

The embodiments of the invention are to provide a thermoplastic resin composition having excellent heat resistance, excellent molding processability and excellent impact resistance and especially having excellent flame retardancy and a molded produce made of the same. The molded product made of the thermoplastic resin composition according to an embodiment of the invention takes advantage of the characteristics described above to be effectively used in various applications including automobile components, electric and electronic equipment components, OA equipment components, building materials and commodities.

### Mode for Carrying Out the Invention

The following describes embodiments of the invention in detail.

According to an embodiment of the invention, the "thermoplastic resin including a polylactic acid resin" (A) includes a polylactic acid resin (A-1) and may further include a thermoplastic resin other than polylactic acid resin (A-2). The "polylactic acid resin" (A-1) herein is a polymer having L-lactic acid and/or D-lactic acid as the major constituent and may include another copolymerization component other than lactic acid. Available examples of another monomer unit include: (i) glycol compounds such as ethylene glycol, propylene glycol, butanediol, heptanediol, hexanediol, octanediol, nonanediol, decanediol, 1,4-cyclohexane dimethanol, neopentyl glycol, glycerin, pentaerythritol, bisphenol A, polyethylene glycol, polypropylene glycol and polytetramethylene glycol; (ii) dicarboxylic acids such as oxalic acid, adipic acid, sebacic acid, azelaic acid, dodecanedioic acid, malonic acid, glutaric acid, cyclohexane dicarboxylic acid, terephthalic acid, isophthalic acid, phthalic acid, naphthalene dicarboxylic acid, bis(p-carboxyphenyl)methane, anthracene dicarboxylic acid, 4,4'-diphenylether dicarboxylic acid, sodium 5-sulfoisophthalate and 5-tetrabutyl phosphonium isophthalic acid; (iii) hydroxycarboxylic acids such as glycolic acid, hydroxypropionic acid, hydroxybutyric acid, hydroxyvaleric acid, hydroxycaproic acid and hydroxybenzoic acid; and (iv) lactones such as caprolactone, valerolactone, propiolactone, undecalactone and 1,5-oxepan-2-one. The amount of such another copolymerization compound is preferably 0 to 30 mol% and is more preferably 0 to 10 mol% relative to the total amount of monomer components.

According to an embodiment of the invention, in terms of the mechanical properties, the thermal properties and the flame retardancy, it is preferable to use the polylactic acid resin (A-1) having high optical purity as the thermoplastic resin including the polylactic acid resin. More specifically, the polylactic acid resin (A-1) preferably includes not less than 80% of L-isomer or not less than 80% of D-isomer to the total content of lactic acid components, more preferably includes not less than 90% of L-isomer or not less than 90% of D-isomer, furthermore preferably includes not less than 95% of L-isomer or not less than 95% of D-isomer and most preferably includes not less than 98% of L-isomer or not less than 98% of D-isomer.

It is also preferable to use a polylactic acid including not less than 80% of L-isomer in combination with a polylactic acid including not less than 80% of D-isomer. It is further preferable to use a polylactic acid including not less than 90% of L-isomer in combination with a polylactic acid including not less than 90% of D-isomer.

According to an embodiment of the invention, a modified resin may be used as the polylactic acid resin (A-1). It is preferable to use, for example, maleic anhydride-modified polylactic acid resin, epoxy-modified polylactic acid resin or amine-modified polylactic acid resin, since these modified resins are likely to improve the mechanical properties as well as the heat resistance.

According to an embodiment of the invention, a known polymerization technique may be employed as a production method of the polylactic acid resin (A-1): for example, direct polymerization method from lactic acid and ring-opening polymerization method via lactide.

According to an embodiment of the invention, the molecular weight of the polylactic acid resin (A-1) is not specifically limited, but its weight-average molecular weight is preferably not less than 100 thousand, more preferably not less than 150 thousand and is most preferably not less than 180 thousand. In terms of the flowability during molding, the upper limit is preferably not greater than 400 thousand. The "weight-average molecular weight" herein indicates a weight-average molecular weight of poly methyl methacrylate (PMMA) equivalent measured by gel permeation chromatography (GPC).

According to an embodiment of the invention, the polylactic acid resin (A-1) is not specifically limited, but is preferably a polylactic acid resin having the melting point of not lower than 120°C, is more preferably a polylactic acid resin having the melting point of not lower than 150°C and is most preferably a polylactic acid resin having the melting point of not lower than 160°C. The polylactic acid resin (A-1) is likely to have the higher melting point with an increase in optical purity. The polylactic acid resin having the high optical purity is thereby used as the polylactic acid resin having the high melting point.

According to an embodiment of the invention, in terms of the heat resistance, it is preferable to use a polylactic acid stereocomplex as the polylactic acid resin (A-1). One available method of forming the polylactic acid stereocomplex is a method of mixing a poly-L-lactic acid with a poly-D-lactic acid by, for example, melt kneading, solution kneading or solid phase kneading. The poly-L-lactic acid usable includes not less than 90 mol%, preferably not less than 95 mol% or more preferably not less than 98 mol% of L-isomer. The poly-D-lactic acid usable includes not less than 90 mol%, preferably not less than 95 mol% or more preferably not less than 98 mol% of D-isomer. In the method of obtaining the polylactic acid stereocomplex by mixing, the weight-average molecular weights of both the poly-L-lactic acid and the poly-D-lactic acid may be not less than 100 thousand. In the method of obtaining the polylactic acid stereocomplex by mixing, however, it is preferable to use a combination of either one of the poly-L-lactic acid and the poly-D-lactic acid having the weight-average molecular weight of not greater than 100 thousand or more preferably not greater than 50 thousand with the other having the weight-average molecular weight of greater than 100 thousand or more preferably not less than 120 thousand. Another available method is a method of forming a block copolymer of the poly-L-lactic acid and the poly-D-lactic acid, i.e., stereoblock polylactic acid. In terms of easily forming the polylactic acid stereocomplex, it is preferable to employ the method of forming the block copolymer of the poly-L-lactic acid and the poly-D-lactic acid.

According to an embodiment of the invention, the thermoplastic resin including the polylactic acid resin (A) may be a thermoplastic resin including only a polylactic acid resin (A-1) or may include a thermoplastic resin other than polylactic acid resin (A-2), in addition to the polylactic acid resin (A-1). When the thermoplastic resin including the polylactic acid resin (A) includes the thermoplastic resin other than polylactic acid resin (A-2), the "thermoplastic resin other than polylactic acid resin" (A-2) means a thermoplastic resin excluding an impact modifier (G) and is a resin other than polylactic acid resin, which shows flowability by heating and is mold-processable by utilizing this characteristic.

According to an embodiment of the invention, concrete examples of the thermoplastic resin other than polylactic acid resin (A-2) include: (i) olefin resins such as polypropylene resin, polyethylene resin and ethylene/ α-olefin copolymer (the symbol "/" indicates copolymerization); (ii) styrene resins such as polystyrene resin, styrene/ acrylonitrile copolymer, acrylonitrile/ butadiene/ styrene copolymer (ABS resin) and methyl (meth)acrylate/ styrene copolymer; (iii) acrylic resins such as poly(methyl methacrylate) resin, poly(methyl acrylate) resin and poly(butyl acrylate) resin; (iv) polyvinyl alcohol resins; (v) polyester resins other than polylactic acid resins such as aliphatic polyester resins and aliphatic-aromatic polyester resins, polycarbonate resins, polyamide resins, polyphenylene oxide resins, modified polyphenylene oxide resins, polyphenylene sulfide resins, polyoxymethylene resins, phenoxy resins and phenol resins. In terms of the heat resistance, the molding processability and the impact resistance, polycarbonate resins, olefin resins, styrene resins, acrylic resins and polyester resins other than polylactic acid resins are preferable as concrete examples of the thermoplastic resin other than polylactic acid resin (A-2) used according to the embodiment of the invention. Among them, in terms of the impact resistance and the flame retardancy, polycarbonate resins and polyester resins other than polylactic acid resins are more preferable as the thermoplastic resin other than polylactic acid resin (A-2) used according to the embodiment of the invention. The thermoplastic resin other than polylactic acid resin (A-2) herein may be only one resin or two or more different resins used in combination.

According to an embodiment of the invention, when the thermoplastic resin other than polylactic acid resin (A-2) is included in the thermoplastic resin including the polylactic acid resin (A), the mixing ratios (weight ratios) of the polylactic acid resin (A-1) and the thermoplastic resin other than polylactic acid resin (A-2) are 1 to 99% by weight of (A-1) and 99 to 1% by weight of (A-2) relative to the total of 100% by weight of (A-1) and (A-2), are more preferably 5 to 95% by weight of (A-1) and 95 to 5% by weight of (A-2) and are most preferably 10 to 90% by weight of (A-1) and 90 to 10% by weight of (A-2).

According to an embodiment of the invention, when the thermoplastic resin other than polylactic acid resin (A-2) is an aliphatic polyester resin, the aliphatic polyester resin herein is not specifically limited but may be, for example, a polymer having an aliphatic hydroxycarboxylic acid as the main constituent or a polymer having an aliphatic polyvalent carboxylic acid and an aliphatic polyvalent alcohol as the main constituents. More specifically, examples of the polymer having the aliphatic hydroxycarboxylic acid as the main constituent include polyglycolic acid, poly(3-hydroxybutyric acid), poly(4-hydroxybutyric acid), poly(4-hydroxyvaleric acid), poly(3-hydroxyhexanoic acid) or polycaprolactone. Examples of the polymer having the aliphatic polyvalent carboxylic acid and the aliphatic polyvalent alcohol as the main constituents include polyethylene adipate, polyethylene succinate, polybutylene adipate, polybutylene succinate and polybutylene succinate adipate. Any of these aliphatic polyesters may be used alone, or two or more of these aliphatic polyesters may be used in combination. Among these aliphatic polyesters, polybutylene succinate and polybutylene succinate adipate are preferable.

According to an embodiment of the invention, when the thermoplastic resin other than polylactic acid resin (A-2) is an aliphatic-aromatic polyester resin, the "aliphatic-aromatic polyester" herein means a polyester having an aliphatic dicarboxylic acid component, an aromatic dicarboxylic acid component and an aliphatic diol component. The aliphatic dicarboxylic acid component may be, for example, succinic acid, adipic acid, suberic acid, sebacic acid or dodecanedioic acid. The aromatic dicarboxylic acid component may be, for example, isophthalic acid, terephthalic acid or 2,6-naphthalene dicarboxylic acid. The aliphatic diol may be, for example, ethylene glycol, 1,4-butanediol, 1,3-propanediol or 1,4-cyclohexanedimethanol. Each of the aliphatic dicarboxylic acid component, the aromatic dicarboxylic acid component and the aliphatic diol component may be two or more different components used in combination.

According to an embodiment of the invention, it is preferable to use aliphatic-aromatic polyester resins including succinic acid, adipic acid, terephthalic acid, ethylene glycol and/or 1,4-butanedoil: more specifically, polyethylene terephthalate, polyethylene terephthalate succinate, polybutylene terephthalate and polybutylene adipate terephthalate. Among these aliphatic-aromatic polyesters, polybutylene adipate terephthalate is preferable.

According to an embodiment of the invention, when the thermoplastic resin other than polylactic acid resin (A-2) is the aliphatic polyester resin and/or the aliphatic-aromatic polyester resin, the thermoplastic resin other than polylactic acid resin may be only one resin or two or more different resins used in combination. When the aliphatic polyester resin and the aliphatic-aromatic polyester resin are used in combination, preferable combinations include a combination of polybutylene succinate and polybutylene adipate terephthalate and a combination of polybutylene succinate adipate and polybutylene adipate terephthalate. When the aliphatic polyester resin and the aliphatic-aromatic polyester resin are used in combination, the mixing ratios (weight ratios) of the aliphatic polyester resin and the aliphatic-aromatic polyester resin are 1 to 99% by weight of the aliphatic polyester resin and 99 to 1% by weight of the aliphatic-aromatic polyester resin relative to the total of 100% by weight of the aliphatic polyester resin and the aliphatic-aromatic polyester resin, are more preferably 5 to 95% by weight of the aliphatic polyester resin and 95 to 5% by weight of the aliphatic-aromatic polyester resin and are most preferably 10 to 90% by weight of the aliphatic polyester resin and 90 to 10% by weight of the aliphatic-aromatic polyester resin.

According to an embodiment of the invention, when the thermoplastic resin other than polylactic acid resin (A-2) is the polycarbonate resin, the "polycarbonate resin" herein specifically indicates a thermoplastic resin obtained by reaction of a divalent or higher polyvalent phenolic compound with a carbonate diester compound such as phosgene or diphenyl carbonate.

According to an embodiment of the invention, the divalent or higher polyvalent phenolic compound is not specifically limited, but available examples include: (i) dihydroxy diaryl alkanes such as 2,2-bis(4-hydroxyphenyl)propane (generally called bisphenol A), bis(4-hydroxyphenyl)methane, bis(4-hydroxyphenyl)phenylmethane, bis(4-hydroxyphenyl)naphthylmethane, bis(4-hydroxyphenyl)-(4-isopropylphenyl)methane, bis(3,5-dichloro-4-hydroxyphenyl)methane, bis(3,5-dimethyl-4-hydroxyphenyl)methane, 1,1-bis(4-hydroxyphenyl)ethane, 1-naphthyl-1,1-bis(4-hydroxyphenyl)ethane, 1-phenyl-1,1-bis(4-hydroxyphenyl)ethane, 1,2-bis(4-hydroxyphenyl)ethane, 2-metthyl-1,1-bis(4-hydroxyphenyl)propane, 2,2-bis(3,5-dimethyl-4-hydroxyphenyl)propane, 1-ethyl-1,1-bis(4-hydroxyphenyl)propane, 2,2-bis(3,5-dichloro-4-hydroxyphenyl)propane, 2,2-bis(3,5-dibromo-4-hydroxyphenyl)propane, 2,2-bis(3-chloro-4-hydroxyphenyl)propane, 2,2-bis(3-methyl-4-hydroxyphenyl)propane, 2,2-bis(3-fluoro-4-hydroxyphenyl)propane, 1,1-bis(4-hydroxyphenyl)butane, 2,2-bis(4-hydroxyphenyl)butane, 1,4-bis(4-hydroxyphenyl)butane, 2,2-bis(4-hydroxyphenyl)pentane, 4-metyl-2,2-bis(4-hydroxyphenyl)pentane, 2,2-bis(4-hydroxyphenyl)hexane, 4,4-bis(4-hydroxyphenyl)heptane, 2,2-bis(4-hydroxyphenyl)nonane, 1,10-bis(4-hydroxyphenyl)decane, 1,1-bis(4-hydroxyphenyl)-3,3,5-trimethylcyclohexane and 2,2-bis(4-hydroxyphenyl)-1,1,1,3,3,3-hexafluoropropane; (ii) dihydroxy diaryl cycloalkanes such as 1,1-bis(4-hydroxyphenyl)cyclohexane, 1,1-bis(3,5-dichloro-4-hydroxyphenyl)cyclohexane and 1,1-bis(4-hydroxyphenyl)cyclodecane; (iii) dihydroxy diaryl sulfones such as bis(4-hydroxyphenyl) sulfone, bis(3,5-dimethyl-4-hydroxyphenyl) sulfone and bis(3-chloro-4-hydroxyphenyl) sulfone; (iv) dihydroxy diaryl ethers such as bis(4-hydroxyphenyl) ether and bis(3,5-dimethyl-4-hydroxyphenyl) ether; (v) dihydroxy diaryl ketones such as 4,4'-dihydroxybenzophenone and 3,3',5,5'-tetramethyl-4,4'-dihydroxybenzophenone; (vi) dihydroxy diaryl sulfides such as bis(4-hydroxyphenyl) sulfide, bis(3-methyl-4-hydroxyphenyl) sulfide and bis(3,5-dimethyl-4-hydroxyphenyl) sulfide; (vii) dihydroxy diaryl sulfoxides such as bis(4-hydroxyphenyl) sulfoxide; (viii) dihydroxydiphenyls such as 4,4'-dihydroxydiphenyl; and (ix) dihydroxy aryl fluorenes such as 9,9-bis(4-hydroxyphenyl)fluorene. Other than the above divalent phenolic compounds, (x) dihydroxybenzenes such as hydroquinone, resorcinol and methyl hydroquinone; and (xi) dihydroxynaphthalenes such as 1,5-dihydroxynaphthalene and 2,6-dihydroxynaphthalene may be used as the divalent phenolic compound.

According to an embodiment of the invention, a trivalent or higher polyvalent phenolic compound is also usable as long as the resulting polycarbonate resin maintains the thermoplasticity. Available examples of the above trivalent or higher polyvalent phenolic compound include: 2,4,4'-trihydroxybenzophenone, 2,2',4,4'-tetrahydroxybenzophenone, 2,4,4'-trihydroxyphenyl ether, 2,2',4,4'-tetrahydroxyphenyl ether, 2,4,4'-trihydroxydiphenyl-2-propane, 2,2'-bis(2,4-dihydroxy)propane, 2,2',4,4'-tetrahydroxydiphenylmethane, 2,4,4'-trihydroxydiphenylmethane, 1-[α-methyl-α-(4'-dihydroxyphenyl)ethyl]-3-[α',α'-bis(4"-hydroxyphenyl)ethyl ]benzene, 1-[α-methyl-α-(4'-dihydroxyphenyl)ethyl]-4-[α',α'-bis(4"-hydroxyphenyl)ethyl ]benzene, α,α',α"-tris(4-hydroxyphenyl)-1,3,5-triisopropylbenzene, 2,6-bis(2-hydroxy-5'-methylbenzyl)-4-methylphenol, 4,6-dimehyl-2,4,6-tris(4'-hydroxyphenyl)-2-heptene, 4,6-dimethyl-2,4,6-tris(4'-hydroxyphenyl)-2-heptane, 1,3,5-trs(4'-hydroxyphenyl)benzene, 1,1,1-tris(4-hydroxyphenyl)ethane, 2,2-bis[4,4-bis(4'-hydroxyphenyl)cyclohexyl] propane, 2,6-bis(2'-hydroxy-5-'-isopropylbenzyl)4-isopropylphenol, bis[2-hydroxy-3-(2'-hydroxy-5'-methylbenzyl)-5-methylphenyl]methane, bis [2-hydroxy-3-(2'-hydroxy-5'-isopropylbenzyl)-5-methylphenyl] methane, tetrakis(4-hydroxyphenyl)methane, tris(4-hydroxyphenyl)phenylmethane, 2',4',7-trihydroxyflavan, 2,4,4-trimethyl-2',4',7-trihydroxyflavan, 1,3-bis(2',4'-dihydroxyphenylisopropyl)benzene and tris(4'-hydroxyphenyl)-amyl-2-triazine. Any of these divalent and higher polyvalent phenolic compounds herein may be used alone, or two or more of these divalent and higher polyvalent phenolic compounds may be used in combination.

According to an embodiment of the invention, the polycarbonate resin may optionally contain a component which is other than the trivalent or higher polyvalent phenolic compound and is used for forming a branched polycarbonate resin, in such a range that does not interfere with the advantageous effects of the embodiment of the invention. Available examples of the above component (branching agent) which is other than the trivalent or higher polyvalent phenolic compound and is used for forming a branched polycarbonate resin include phloroglucin, mellitic acid, trimellitic acid, trimellitic chloride, trimellitic anhydride, gallic acid, n-propyl gallate, protocatechuic acid, pyromellitic acid, pyromellitic dianhydride, α-resorcinol acid, resorcinol aldehyde, trimethyl chloride, isatinbis(o-cresol), trimethyl trichloride, 4-chloroformyl)phthalic anhydride and benzophenone tetracarboxylic acid.

According to an embodiment of the invention, other than the above, for example, linear aliphatic divalent carboxylic acids such as adipic acid, pimelic acid, suberic acid, azelaic acid, sebacic acid and decane dicarboxylic acid, and siloxane such as dimethyl siloxane may be used as the copolymerization component of the polycarbonate resin.

Any of various known compounds used as a terminal terminator in the process of polymerization may optionally be used as a component of the polycarbonate resin used according to an embodiment of the invention in such a range that does not interfere with the advantageous effects of the embodiment of the invention. Concrete examples include monovalent phenolic compounds such as phenol, p-cresol, p-t-butylphenol, p-t-octylphenol, p-cumylphenol, bromophenol, tribromophenol and nonylphenol.

According to an embodiment of the invention, examples of a diester carbonate compound used as the raw material of the polycarbonate resin include: diaryl carbonates such as diphenyl carbonate; and dialkyl carbonates such as dimethyl carbonate and diethyl carbonate.

According to an embodiment of the invention, preferable concrete examples of the polycarbonate resin include: a polycarbonate resin obtained by interfacial polycondensation method utilizing reaction of bisphenol A with phosgene; and a polycarbonate resin obtained by melt polymerization method utilizing reaction of bisphenol A with diphenyl carbonate.

According to an embodiment of the invention, the number-average molecular weight (Mn) of the polycarbonate resin is preferably 3,000 to 50,000, is more preferably 4,000 to 40,000 and is most preferably 5,000 to 30,000. The "number-average molecular weight" (Mn) herein indicates a number-average molecular weight of PMMA equivalent measured by gel permeation chromatography (GPC) after dissolution of the polycarbonate resin in tetrahydrofuran.

According to an embodiment of the invention, the mixing amount of a flame retardant (B) is 10 to 50 parts by weight of the flame retardant (B) relative to 100 parts by weight of the thermoplastic resin including the polylactic acid resin (A), is more preferably 15 to 40 parts by weight and is furthermore preferably 15 to 35 parts by weight. In this embodiment, the parts-by-weight content of each substance is based on the weight measured prior to mixing.

According to an embodiment of the invention, the "flame retardant" (B) is not specifically limited but may be any substance added for the purpose of providing flame retardancy to the resin. Concrete examples include metal hydroxides, phosphorus-based flame retardants, bromine-based flame retardants, nitrogen compound-based flame retardants, silicone-based flame retardants and inorganic flame retardants other than metal hydroxides. Any of these flame retardants may be used alone, or two or more of these flame retardants may be used in combination. It is preferable to use at least one selected among metal hydroxides and phosphorus-based flame retardants.

According to an embodiment of the invention, the metal hydroxide is not specifically limited but may be any of metal hydroxides generally used as the flame retardant. Typical examples include aluminum hydroxide, magnesium hydroxide, calcium hydroxide, chromium hydroxide, zirconium hydroxide, nickel hydroxide and boron hydroxide. Aluminum hydroxide, magnesium hydroxide and calcium hydroxide are more preferably used as the metal hydroxide. Aluminum hydroxide is especially preferable as the metal hydroxide, in terms of not only preventing reduction in molecular weight of the polylactic acid resin (A) in the course of melt kneading and providing the excellent impact resistance but providing the high strength, excellent resistance to moist and heat and excellent surface appearance of a molded product. Any of these metal hydroxides may be used alone, or two or more of these metal hydroxides may be used in combination.

According to an embodiment of the invention, examples of the aluminum hydroxide include gibbsite aluminum hydroxide, bayerite aluminum hydroxide, one molecule-dehydrated boehmite aluminum hydroxide, diaspore aluminum hydroxide and mixtures thereof. More preferable are gibbsite aluminum hydroxide and a mixture of gibbsite aluminum hydroxide and boehmite aluminum hydroxide.

According to an embodiment of the invention, the metal hydroxide is subjected to a dehydration reaction that degrades the metal hydroxide with absorption of heat to form a metal oxide and water with an increase in temperature in the course of firing and provides flame retardancy. The gibbsite aluminum hydroxide is subjected to the dehydration reaction in a temperature range of 250 to 300°C. Magnesium hydroxide is subjected to the dehydration reaction in a temperature range of 350 to 400°C. The boehmite aluminum oxide is subjected to the dehydration reaction in a temperature range of 400 to 600°C. The diaspore aluminum hydroxide is subjected to the dehydration reaction in a temperature range of 450 to 650°C.

According to an embodiment of the invention, the temperature of the dehydration reaction of the metal hydroxide may be determined, for example, from a weight loss start temperature in thermo-gravimetric analysis (TGA) measurement.

According to an embodiment of the invention, the median diameter (D50) in particle size distribution measurement of the metal hydroxide is not specifically limited, but is preferably 0.05 to 100 µm, is more preferably 0.1 to 50 µm, is furthermore preferably 0.3 to 30 µm, is especially preferably 0.4 to 15 µm and is most preferably 0.5 to 10 µm. The "median diameter (D50)" in particle size distribution measurement of the above metal hydroxide means a particle diameter where the greater part and the smaller part are equal to each other when powder is divided into two parts on the basis of a specified particle diameter. In other words, the "median diameter (D50)" is a diameter having the particle weight percent of 50% in a cumulative distribution. The "median diameter (D50)" herein indicates a median diameter measured by liquid phase sedimentation method using an X-ray transmission particle size distribution measurement device ("SediGraph 5120" manufactured by Titan Technologies K.K.). This measurement is performed, prior to mixing with other materials.

According to an embodiment of the invention, the phosphorus-based flame retardant is not specifically limited but may be any of phosphorus-based flame retardants generally used as the flame retardant. Typical examples include: organophosphorus compounds such as phosphate esters, condensed phosphate esters and polyphosphate salts; and red phosphorus.

According to an embodiment of the invention, concrete examples of the phosphate ester of the organophosphorus compound include trimethyl phosphate, triethyl phosphate, tributyl phosphate, tri(2-ethylhexyl) phosphate, tributoxyethyl phosphate, triphenyl phosphate, tricresyl phosphate, trixylenyl phosphate, tris(isopropylphenyl) phosphate, tris(phenylphenyl) phosphate, trinaphthyl phosphate, cresyl diphenyl phosphate, xylenyl diphenyl phosphate, diphenyl(2-ethylhexyl) phosphate, di(isopropylphenyl) phenyl phosphate, monoisodecyl phosphate, 2-acryloyloxyethyl acid phosphate, 2-methacryloyloxyethyl acid phosphate, diphenyl-2-acryloyloxyethyl acid phosphate, diphenyl-2-methacryloyloxyethyl acid phosphate, melamine phosphate, dimelamine phosphate, melamine pyrophosphate, triphenylphosphine oxide, tricresylphosphine oxide, diphenyl methanephosphonate, diethyl phenylphosphonate, resorcinol polyphenyl phosphate, resorcinol poly(di-2,6-xylyl) phosphate, bisphenol A polycresyl phosphate, hydroquinone poly(2,6-xylyl) phosphate and condensed phosphate esters such as condensates thereof. Examples of commercially available condensed phosphate esters include PX-200, PX-201, PC-202, CR-733S, CR-741 and CR-747 manufactured by DAIHACHI CHEMICAL INDUSTRY CO., LTD. In terms of the hydrolyzability condensed phosphate esters shown by Formula (1) given below is especially preferably used.

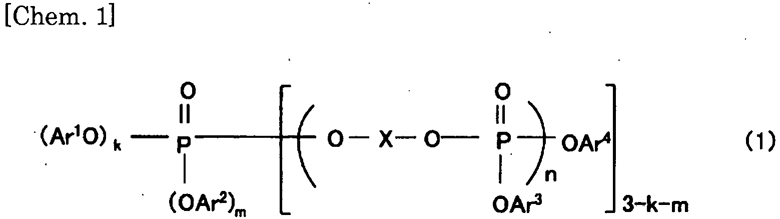

(In the above formula, Ar¹, Ar², Ar³ and Ar⁴ represent no-halogen-containing identical or different aromatic groups. X shows a structure selected from Formulae (2) to (4) given below. In Formulae (2) to (4), R¹ to R⁸ represent identical or different hydrogen atom or 1 to 5 carbon atom-containing alkyl groups, Y represents a direct bond by O, S, SO₂, C(CH₃)₂, CH₂ or CHPh, wherein Ph represents a phenyl group. In Formula (1), n is an integer of not less than 1. In Formula (1), k and m are respectively integers not less than 0 and not greater than 2, and (k+m) is an integer of not less than 0 and not greater than 2). The aromatic condensed phosphate ester herein may be a mixture of aromatic condensed phosphate esters having different values n or different structures.

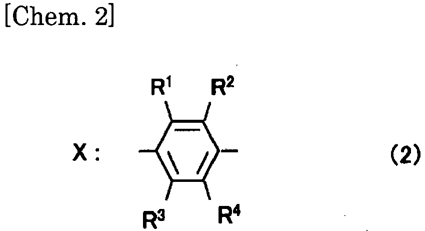

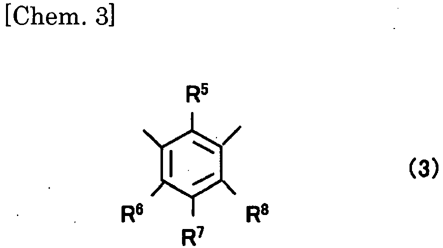

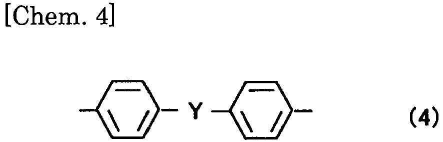

In Formula (1) given above, n is an integer of not less than 1. In terms of the flame retardancy, the upper limit of n is preferably not greater than 40. The value n is preferably 1 to 10 and is especially preferably 1 to 5.

Additionally, k and m are respectively integers of not less than 0 and not greater than 2, and (k+m) is an integer of not less than 0 and not greater than 2. Preferably k and m are respectively set equal to 1.

In Formulae (2) to (4) given above, R¹ to R⁸ represent identical or different hydrogen atom or 1 to 5 carbon atom-containing alkyl groups. Concrete examples of the 1 to 5 carbon atom-containing alkyl group include methyl group, ethyl group, n-propyl group, isopropyl group, n-butyl group, sec-butyl group, tert-butyl group and neopentyl group. Hydrogen, methyl group and ethyl group are preferable as the alkyl groups of R¹ to R⁸, and hydrogen is especially preferable.

Ar¹, Ar², Ar³ and Ar⁴ represent no-halogen-containing identical or different aromatic groups. The aromatic group may be an aromatic group having a benzene skeleton, a naphthalene skeleton, an indene skeleton or an anthracene skeleton. Among them, the aromatic group having a benzene skeleton or the aromatic group having a naphthalene skeleton are preferable as the aromatic groups of Ar¹, Ar², Ar³ and Ar⁴. Any of these aromatic groups may be substituted with a no-halogen-containing organic residue (preferably 1 to 8 carbon atom-containing organic residue). In this case, the number of substituents is not specifically limited but is preferably 1 to 3. Concrete examples of the aromatic group include phenyl group, tolyl group, xylyl group, cumenyl group, mesityl group, naphthyl group, indenyl group and anthryl group. Preferable are phenyl group, tolyl group, xylyl group, cumenyl group and naphthyl group, and especially preferable are phenyl group, tolyl group and xylyl group.

Among them, compounds (5) and (6) given below are preferable for Ar¹, Ar², Ar³ and Ar⁴, and the compound (5) is especially preferable.

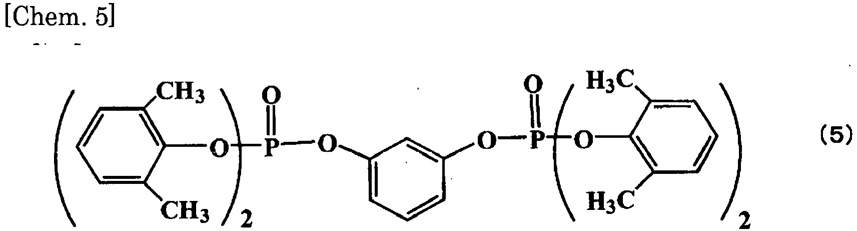

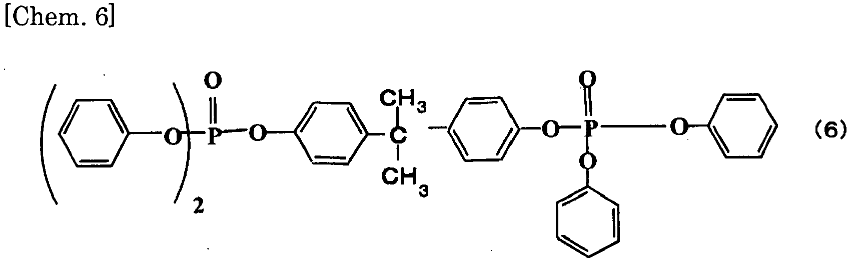

According to an embodiment of the invention, the "polyphosphate salt" of the organophosphorus compound is a salt made of one or more inorganic phosphorus compound selected among phosphoric acid, pyrophosphoric acid and polyphosphoric acid and one of metals in group IA to group IVB of the periodic table, ammonia, aliphatic amines and aromatic amines.

Typical examples of the polyphosphate salt include: metal salts such as lithium salt, sodium salt, calcium salt, barium salt, iron (II) salt, iron (III) salt and aluminum salt; aliphatic amine salts such as methylamine salt, ethylamine salt, diethylamine salt, triethylamine salt, ethylenediamine salt, and piperazine salt; and aromatic amine salts such as pyridine salt, triazine salt, melamine salt and ammonium salt. The melamine salt and the piperazine salt are especially preferable as the above polyphosphate salt. Any of these polyphosphate salts may be used alone, or two or more of these polyphosphate salts may be used in combination.

According to an embodiment of the invention, the red phosphorus is not limited to untreated red phosphorus, but preferably used is red phosphorus treated with one or more compound coatings selected from the group consisting of thermosetting resin coating, metal hydroxide coating and metal plating coating. The thermosetting resin used for thermosetting resin coating is not specifically limited but may be any of thermosetting resins that can coat the red phosphorus. Available examples include phenol-formalin resins, urea-formalin resins, melamine-formalin resins and alkyd resins. The metal hydroxide used for metal hydroxide coating is not specifically limited but may be any of metal hydroxides that can coat the red phosphorus. Available examples include aluminum hydroxide, magnesium hydroxide, zinc hydroxide and titanium hydroxide. The metal used for metal plating coating is not specifically limited but may be any of metals that can coat the red phosphorus. Available examples include Fe, Ni, Co, Cu, Zn, Mn, Ti, Zr, Al and their alloys. Additionally, two or more of different coatings may be combined or may be stacked.

According to an embodiment, among the phosphorus-based flame retardants, preferable are condensed phosphate esters, polyphosphate salts and red phosphorus; especially preferable are condensed phosphate esters and polyphosphate salts; furthermore preferable are condensed phosphate esters; and specifically preferable are aromatic condensed phosphate esters.

According to an embodiment of the invention, the bromine-based flame retardant is not specifically limited but may be any of bromine-based flame retardants generally used as the flame retardant. Typical examples of the bromine-based flame retardant include decabromodiphenyl oxide, octabromodiphenyl oxide, tetrabromodiphenyl oxide, tetrabromophthalic anhydride, hexabromocyclododecane, bis(2,4,6-tribromophenoxy)ethane, ethylene-bis(tetrabromophthalimide), hexabromobenzene, 1,1-sulfonyl[3,5-dibromo-4-(2,3-dibromopropoxy)]benzene, poly(dibromophenylene oxide), tetrabromo bisphenol S, tris(2,3-dibromopropyl-1)isocyanurate, tribromophenol, tribromophenyl allyl ether, tribromo neopentyl alcohol, brominated polystyrene, brominated polyethylene, tetrabromo bisphenol A, tetrabromo bisphenol A derivative, tetrabromo bisphenol A - epoxy oligomer or polymer, tetrabromo bisphenol A - carbonate oligomer or polymer, brominated epoxy resins such as brominated phenol novolac epoxy resin, tetrabromo bisphenol A - bis(2-hydroxydiethyl ether), tetrabromo bisphenol A - bis(2,3-dibromopropyl ether), tetrabromo bisphenol A - bis(allyl ether), tetrabromocyclooctane, ethylene bis(pentabromodiphenyl), tris(tribromoneopentyl) phosphate, poly(pentabromobenzyl polyacrylate), octabromotrimethylphenylindane, dibromoneopentyl glycol, pentabromobenzyl polyacrylate, dibromocresyl glycidyl ether and N,N'-ethylene-bis-tetrabromophthalimide. Among them, preferable are tetrabromo bisphenol A - epoxy oligomer, tetrabromo bisphenol A - carbonate oligomer and brominated epoxy resins.

According to an embodiment of the invention, the nitrogen compound-based flame retardant is not specifically limited but may be any of nitrogen compound-based flame retardants generally used as the flame retardant. Typical examples include aliphatic amine compounds, aromatic amine compounds, nitrogen-containing heterocyclic compounds, cyanides, aliphatic amides, aromatic amides, urea and thiourea. The nitrogen-containing phosphorus-based flame retardant such as poly(ammonium phosphate) mentioned as an example of the above phosphorus-based flame retardant is not included in the "nitrogen compound-based flame retardant" herein. Examples of the aliphatic amine include ethylamine, butylamine, diethylamine, ethylenediamine, butylenediamine, triethylenetetramine, 1,2-diaminocyclohexane and 1,2-diaminocyclooctane. Examples of the aromatic amine include aniline and phenylenediamine. Examples of the nitrogen-containing heterocyclic compound include uric acid, adenine, guanine, 2,6-diaminopurine, 2,4,6-triaminopyridine and triazine compounds. One example of the cyanide is dicyandiamide. One example of the aliphatic amide is N,N-dimethylacetamide. One example of the aromatic amide is N,N-diphenylacetamide.

The triazine compound mentioned above is a nitrogen-containing heterocyclic compound having a triazine skeleton. Examples include triazine, melamine, benzoguanamine, methylguanamine, cyanuric acid, melamine cyanurate, melamine isocyanurate, trimethyltriazine, triphenyltriazine, ammeline, ammelide, thiocyanuric acid, diaminomercaptotriazine, diaminomethyltriazine, diaminophenyltriazine and diaminoisopropoxytriazine.

As the melamine cyanurate or melamine isocyanurate, preferable is an adduct of cyanuric acid or isocyanuric acid and a triazine compound. An example is an adduct having generally the 1 to 1 composition (molar ratio) or, in some cases, the 1 to 2 composition (molar ratio). The melamine cyanurate or melamine isocyanurate may be produced by a known method. For example, a method provides an aqueous slurry of a mixture of melamine and cyanuric acid or isocyanuric acid, blends the mixture sufficiently to form fine particles of a salt of the mixture and subsequently filters and dries this slurry to obtain the melamine cyanurate or melamine isocyanurate generally in a powdery form. The above salt does not need to be completely pure, but a slight amount of unreacted melamine or cyanuric acid or isocyanuric acid may remain in the salt. Additionally, in terms of the flame retardancy, the mechanical strength and the surface property of a molded product, the median diameter prior to mixing with the resin is preferably 100 to 0.01 µm and is more preferably 80 to 1 µm. The median diameter (D50) herein indicates a median diameter measured by the liquid phase sedimentation method using the X-ray transmission particle size distribution measurement device ("SediGraph 5120" manufactured by Titan Technologies K.K.).

Among the nitrogen compound-based flame retardants, preferable are nitrogen-containing heterocyclic compounds; especially preferable are triazine compounds; and furthermore preferable is melamine cyanurate.

When the above nitrogen compound-based flame retardant has poor dispersibility, a dispersing agent such as tris(β-hydroxyethyl)isocyanurate or a known surface treatment agent such as polyvinyl alcohol or a metal oxide may be used concurrently.

According to an embodiment of the invention, the silicone-based flame retardant is not specifically limited but may be any of silicone-based flame retardants generally used as the flame retardant. Typical examples of the silicone-based flame retardant include silicone resins and silicone oils. The above silicone resin may be a resin having a three-dimensional net-like structure formed by combining structural units of SiO₂, RSiO_{3/2},R₂SiO and R₃S₁O_{1/2}. Herein R represents an alkyl group such as methyl group, ethyl group or propyl group, an aromatic group such as phenyl group or benzyl group or any of these groups further containing a vinyl group as a substituent. The above silicone coil may be poly(dimethyl siloxane), a modified polysiloxane having at least one methyl group in a side chain or a terminal of poly(dimethyl siloxane) modified with at least one group selected among hydrogen element, alkyl group, cyclohexyl group, phenyl group, benzyl group, amino group, epoxy group, polyether group, carboxyl group, mercapto group, chloroalkyl group, alkyl higher alcohol ester group, alcohol group, aralkyl group, vinyl group and trifluoromethyl group, or any of mixtures thereof. Additionally, when a polycarbonate resin is used as the thermoplastic resin other than polylactic acid (B), a copolymer of the polycarbonate resin and a silicone compound such as a silicone resin or poly(dimethyl siloxane) may be used as the flame retardant (B).

Examples of the inorganic flame retardant other than metal hydroxide preferably used according to an embodiment of the invention include antimony trioxide, antimony pentoxide, sodium antimonite, zinc hydroxystannate, zinc stannate, metastannic acid, tin oxides, tin oxide salts, zinc sulfate, zinc oxide, iron (II) oxide, iron (III) oxide, tin (II) oxide, tin (IV) oxide, zinc borate, calcium borate, ammonium borate, ammonium octamolybdate, metal salts of tungstic acid, complex acid oxides of tungsten and metalloids, ammonium sulfamate, graphite and swellable graphite. Among them, zinc borate and swellable graphite are preferable.

According to an embodiment of the invention, the mixing amount of low melting point glass powder (C) is 1 to 20 parts by weight of the low melting point glass powder (C) relative to 100 parts by weight of the thermoplastic resin including the polylactic acid resin (A), is more preferably 1 to 15 parts by weight and is furthermore preferably 1 to 10 parts by weight. The mixing amount of the low melting point glass powder (C) of less than 1 part by weight does not provide the effect of giving flame retardancy. The mixing amount of greater than 20 parts by weight, on the other hand, lowers the molecular weight of the polylactic acid resin (A) by the unreacted low melting point glass powder (C) and thereby decreases the impact resistance.

According to an embodiment of the invention, the mixing ratio of the flame retardant (B) and the low melting point glass powder (C) (flame retardant (B) / low melting point glass powder (C)) is preferably 50/50 to 90/10 in weight ratio, is more preferably 60/40 to 90/10, is furthermore preferably 65/35 to 85/15, and is furthermore preferably 75/25 to 85/15. The weight ratio out of the range of 50/50 to 90/10 may not provide the effect of giving flame retardancy, while lowering the molecular weight of the polylactic acid resin (A) by the unreacted low melting point glass powder (C) and thereby decreasing the impact resistance.

According to an embodiment of the invention, the median diameter (D50) in particle size distribution measurement of the low melting point glass powder (C) is not greater than 6 µm, is more preferably 3.5 to 5.5 µm and is furthermore preferably 4 to 5 µm. The "median diameter (D50)" in particle size distribution measurement according to the embodiment of the invention means a diameter where the greater part and the smaller part are equal to each other when powder is divided into two parts on the basis of a specified particle diameter; in other words, a diameter having the particle weight percent of 50% in a cumulative distribution. The "median diameter (D50)" herein indicates a median diameter measured by the liquid phase sedimentation method using the X-ray transmission particle size distribution measurement device ("SediGraph 5120" manufactured by Titan Technologies K.K.).

According to the embodiment of the invention, the median diameter (D50) of the low melting point glass powder (C) of not greater than 6 µm improves the dispersibility of the low melting point glass powder (C) in the resin composition. As a result, this enhances the reactivity of the flame retardant (B) with the low melting point glass powder (C) in the course of firing and thereby improves the flame retardancy.

According to an embodiment of the invention, the low melting point glass powder (C) may be obtained by, for example, a known method and known apparatus that mixes, melts and subsequently solidifies glass raw materials to produce glass cullets of low melting point glass and pulverizes the glass cullets to achieve a predetermined median diameter. Available pulverization methods of pulverizing glass cullets include: set pulverization techniques such as medium stirring mill, colloid mill and wet ball mill; and dry pulverization techniques such as jet mill, dry ball mill and roll crusher. A plurality of different pulverization techniques may be employed in combination to pulverize the glass cullets. A classification process may be employed as the method of setting the median diameter of the pulverized glass powder to not greater than 6 µm. The classification process is not specifically limited, but a wind power classifier or a screen classifier is preferably used for this purpose.

According to an embodiment of the invention, the softening temperature of the low melting point glass powder (C) is preferably not higher than 600°C and is more preferably not higher than 550°C. The softening temperature is also generally not lower than 300°C. The "softening temperature" herein means a softening temperature measured by a differential thermal analyzer ("TG-DTA TG8120" manufactured by Rigaku Corporation).

According to the embodiment of the invention, when a metal hydroxide is used as the flame retardant (B), for example, the softening temperature of the low melting point glass powder (C) of not higher than 600°C accelerates the reaction of the metal hydroxide with the low melting point glass powder (C) in the course of firing and forms a glassy heat insulating layer, thereby improving the flame retardancy.

According to an embodiment of the invention, the low melting point glass powder (C) includes SiO₂ as an essential component, and concrete examples of the other available components of the low melting point glass powder (C) include B₂O₃, P₂O₅, ZnO, Bi₂O₃, Al₂O₃, BaO, CaO, MgO, MnO₂, ZrO₂, TiO₂, CeO₂, SrO, V₂O₅, SnO₂, Li₂O, Na₂O, K₂O, PbO, CdO, ZnO, FeO and CuO.

According to an embodiment of the invention, the mixing amount of a crystal nucleating agent (D) is preferably 0.01 to 50 parts by weight of the crystal nucleating agent (D) relative to 100 parts by weight of the thermoplastic resin including the polylactic acid resin (A), is more preferably 0.05 to 40 parts by weight and is furthermore preferably 0.1 to 30 parts by weight.

According to an embodiment of the invention, any of crystal nucleating agents generally used for polymers may be used as the crystal nucleating agent (D) without any limitation. One or more crystal nucleating agents selected among inorganic crystal nucleating agents and organic crystal nucleating agents may be used as the crystal nucleating agent.

Concrete examples of the inorganic crystal nucleating agent include talc, kaolinite, mica, synthetic mica, clay, zeolite, silica, carbon black, calcium sulfide, magnesium carbonate, calcium carbonate and barium sulfate. In terms of the significant effect of improving the heat resistance, talc, kaolinite, mica and synthetic mica are preferable, and talc is more preferable in terms of the moldability. Any of these inorganic crystal nucleating agents may be used alone or two or more of these inorganic crystal nucleating agents may be used in combination. It is preferable to modify any of these inorganic crystal nucleating agents with an organic substance, in order to enhance the dispersibility in the composition.

Concrete examples of the organic crystal nucleating agent include: (i) metal salts of organic carboxylic acids such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate and sodium cyclohexane carboxylate; (ii) organic sulfonates such as sodium p-toluenesulfonate and sodium sulfoisophthalate; (iii) carboxylic acid amides such as trimesic tris(t-butylamide); (iv) hydrazide compounds such as dihydrazide adipate, dihydrazide phthalate and dihydrazide N,N'-dibenzoyl sebacate; (v) sodium salts or potassium salts of carboxyl group-containing polymers (i.e., ionomers) such as sodium salt of ethylene/ acrylic acid or methacrylic acid copolymer and sodium salt of styrene/ maleic anhydride copolymer; (vi) benzylidene sorbitol and its derivatives, metal salts of phosphorus compounds such as sodium 2,2'-methylene-bis(4,6-di-t-butylphenyl)phosphate and 2,2-methyl-bis(4,6-di-t-butylphenyl) sodium; and (vii) metal salts of aromatic ring-containing phosphonic acids such as magnesium phenylphosphonate, calcium phenylphosphonate and zinc phenylphosphonate. As the organic crystal nucleating agent, metal salts of organic carboxylic acids, carboxylic acid amides, hydrazide compounds and metal salts of aromatic ring-containing phosphonic acids are preferable in terms of the significant effect of improving the heat resistance. Any of these organic crystal nucleating agents may be used alone, or two or more of these organic crystal nucleating agents may be used in combination.

According to an embodiment of the invention, in terms of improving the molding processability, it is preferable to add 0.1 to 50 parts by weight of a plasticizer (F) to 100 parts by weight of the thermoplastic resin including the polylactic acid resin (A); it is more preferable to add 0.5 to 40 parts by weight of the plasticizer (F); and it is furthermore preferable to add 1 to 30 parts by weight of the plasticizer (F).

According to an embodiment of the invention, any of plasticizers generally used for polymers may be used as the plasticizer (F) without any limitation. Examples of the plasticizer include polyester-based plasticizer, glycerin-based plasticizers, polyvalent carboxylate ester-based plasticizer, polyalkylene glycol-based plasticizers and epoxy plasticizers.

Concrete examples of the polyester-based plasticizer include: (i) polyesters made of an acid component (ia) such as adipic acid, sebacic acid, terephthalic acid, isophthalic acid, naphthalenedicarboxylic acid, diphenyldicarboxylic acid or rosin; and a diol component (ib) such as propylene glycol, 1,3-butanediol, 1,4-butanediol, 1,6-hexanediol, ethylene glycol or diethylene glycol; and (ii) polyesters made of a hydroxycarboxylic acid such as polycaprolactone. Any of these polyesters may have a terminal blocked with a monofunctional carboxylic acid or a monofunctional alcohol or may have a terminal blocked with an epoxy compound.

Concrete examples of the glycerin-based plasticizer include glycerin monoacetomonolaurate, glycerin diacetomonolaurate, glycerin monoacetomonostearate, glycerin diacetomonooleate and glycerin monoacetomonomontanate.

Concrete examples of the polyvalent carboxylic acid-based plasticizer include: phthalates such as dimethyl phthalate, diethyl phthalate, dibutyl phthalate, dioctyl phthalate, diheptyl phthalate, dibenzyl phthalate and butyl benzyl phthalate; trimellitates such as tributyl trimellitate, trioctyl trimellitate and trihexyl trimellitate; adipates such as diisodecyl adipate, n-octyl-n-decyl adipate, methyl diglycol butyl diglycol adipate, benzyl methyl diglycol adipate and benzyl butyl diglycol adipate; citrates such as triethyl acetyl citrate and tributyl acetyl citrate; azelates such as di-2-ethylhexyl azelates; and sebacates such as dibutyl sebacate and di-2-ethylhexyl sebacate.

Concrete examples of the polyalkylene glycol-based plasticizer include: polyalkylene glycols such as polyethylene glycol, polypropylene glycol, poly(ethylene oxide - propylene oxide) block and/or random copolymers, polytetramethylene glycol, ethylene oxide addition polymers of bisphenols, propylene oxide addition polymers of bisphenols and tetrahydrofuran addition polymers of bisphenols; and their terminal blocked compounds such as terminal epoxy-modified compounds, terminal ester-modified compounds and terminal ether-modified compounds.

The "epoxy plasticizer" generally indicates, for example, epoxy triglycerides made of an alkyl epoxystearate and soybean oil. According to this embodiment, however, the epoxy plasticizer also includes epoxy resins mainly made of bisphenol A and epichlorohydrin as the raw materials.

Concrete examples of the other plasticizers include: (i) benzoates of aliphatic polyols such as neopentyl glycol dibenzoate, diethylene glycol dibenzoate and triethylene glycol di-2-ethylbutyrate; (ii) fatty acid amides such as stearic acid amide; (iii) aliphatic carboxylates such as butyl oleate; (iv) hydroxy acid esters such as methyl acetylricinoleate and butyl acetylricinoleate; and (v) pentaerythritol, polyacrylates and paraffins. Among the plasticizers mentioned above, especially preferable is at least one selected from the polyester-based plasticizers, glycerin-based plasticizers and polyalkylene glycol-based plasticizers, and two or more of these plasticizers may be used in combination.

According to an embodiment of the invention, in terms of improving the heat resistance and the impact resistance with maintaining the flame retardancy, it is preferable to add 0.1 to 10 parts by weight of a silane coupling agent (F) to 100 parts by weight of the thermoplastic resin including the polylactic acid resin (A); it is more preferable to add 0.5 to 5 parts by weight of the silane coupling agent (F).

According to an embodiment of the invention, any of known silane coupling agents is preferably used as the silane coupling agent: for example, epoxy silane coupling agents, aminosilane coupling agents, (meth)acrylic silane coupling agents and isocyanate silane coupling agents.

Examples of the above epoxy silane coupling agent include [2-(3,4-epoxycyclohexyl)ethyl]trimethoxysilane, 3-glycidoxypropylmethyldimethoxysilane, 3-glycidoxypropyltrimethoxysilane, 3-glycidoxypropylmethyldiethoxysilane and 3-glycidoxypropyltriethoxysilane.

Examples of the above aminosilane coupling agent include hydrochlorides of N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane and N-(vinylbenzyl)-2-aminoethyl-3-aminopropyltrimethoxysilane.

Examples of the above (meth)acrylic silane coupling agent include 3-methacryloxypropylmethyldimethoxysilane, 3-methacryloxypropyltrimethoxysilane, 3-methacryloxypropylmethyldiethoxysilane, 3-methacryloxypropyltriethoxysilane and 3-acryloxypropyltrimethoxysilane.

One example of the above isocyanate silane coupling agent is 3-isocyanate propyltriethoxysilane.

In terms of improving the heat resistance and the impact resistance with maintaining the flame retardancy, epoxy silane coupling agents are especially preferable as the silane coupling agent according to the embodiment of the invention. Examples of commercially available silane coupling agents include KBM-303, KBM-402, KBM-403, KBE-402 and KBE403 manufactured by Shin-Etsu Chemical Co., Ltd.

Additionally, in terms of improving the impact resistance, in the thermoplastic resin composition according to an embodiment of the invention, it is preferable to add 0.1 to 50 parts by weight of an impact modifier relative to 100 parts by weight of the thermoplastic resin including the polylactic acid resin (A); it is more preferable to add 0.5 to 40 parts by weight of the impact modifier; and it is most preferable to add 1 to 30 parts by weight of the impact modifier.

The above "impact modifier" is not specifically limited but may be any of impact modifiers that can be used for improvement of the impact resistance of thermoplastic resins. The "impact modifier" means a polymer that has rubber elasticity at room temperature and excludes the thermoplastic resin other than the polylactic acid resin (A-2).

Concrete examples of the impact modifier according to an embodiment of the invention include: ethylene/ propylene copolymers, ethylene/ propylene/ unconjugated diene copolymers, ethylene/ butene-1 copolymers, various acrylic rubbers, core shell-type rubbers, ethylene/ acrylic acid copolymers and their alkali metal salts (i.e., ionomers), ethylene/ alkyl acrylate copolymers (e.g., ethylene/ ethyl acrylate copolymer and ethylene/butyl acrylate copolymer), acid-modified ethylene/ propylene copolymers, diene rubbers (e.g., polybutadiene, polyisoprene and polychloroprene), copolymers of diene and vinyl monomer (e.g., styrene/ butadiene random copolymers, styrene/ butadiene block copolymers, styrene/ butadiene/ styrene block copolymers and their hydrogenated copolymers, styrene/ isoprene random copolymers, styrene/ isoprene block copolymers, and styrene/ isoprene/ styrene block copolymers and their hydrogenated copolymers), polyisobutylenes, copolymers of isobutylene and butadiene or isoprene, natural rubbers, Thiokol rubbers, polysulfide rubbers, silicone rubbers, polyurethane rubbers, polyether rubbers, epichlorohydrin rubbers, polyester-based elastomers and polyamide-based elastomers. As the impact modifier, more preferable are ethylene/ propylene copolymers, ethylene/ butene-1 copolymers, core shell-type rubbers, copolymers of diene and vinyl monomer, polyester-based elastomer and polyamide-based elastomers; and most preferable are core shell-type rubbers.

The "core shell-type rubber" according to an embodiment of the invention is a polymer that consists of a core layer (innermost layer) and one or more layers (shell layers) coating the core layer and has a structure where adjacent layers are made of different polymers. The number of layers constituting the above core shell-type rubber is not specifically limited but may be two or more layers, three or more layers or four or more layers. The above core shell-type rubber preferably has at least one inner rubber layer and more preferably has a rubber layer in the core layer (innermost layer).

In the core shell-type rubber according to the embodiment of the invention, the type of the rubber layer is not specifically limited but may be any rubber made of a polymer component having rubber elasticity; for example, rubbers made of a polymerized component of an acrylic component, a silicone component, a styrene component, a nitrile component, a conjugated diene component, an urethane component or an ethylene propylene component. Preferable examples of such rubber include rubbers made of a polymerized component of: an acrylic component such as an ethyl acrylate unit or a butyl acrylate unit; a silicone component such as a dimethyl siloxane unit or a phenyl methyl siloxane unit; a styrene component such as a styrene unit or an α-methylstyrene unit; a nitrile component such as an acrylonitrile unit or a methacrylonitrile unit; or a conjugated diene component such as a butadiene unit or an isoprene unit. Additionally, rubbers made of a copolymerized component of two or more of these components in combination are also preferable; for example, (1) rubbers made of a copolymerized component of an acrylic component such as an ethyl acrylate unit or a butyl acrylate unit and a silicone component such as a dimethyl siloxane unit or a phenyl methyl siloxane unit; (2) rubbers made of a copolymerized component of an acrylic component such as an ethyl acrylate unit or a butyl acrylate unit and a styrene component such as a styrene unit or an α-methylstyrene unit; (3) rubbers made of a copolymerized component of an acrylic component such as an ethyl acrylate unit or a butyl acrylate unit and a conjugated diene component such as a butadiene unit or an isoprene unit; and (4) rubbers made of a copolymerized component of an acrylic component such as an ethyl acrylate unit or a butyl acrylate unit, a silicone component such as a dimethyl siloxane unit or a phenyl methyl siloxane unit and a styrene component such as a styrene unit or an α-methylstyrene unit. Additionally, also preferable are rubbers copolymerized and cross-linked with a cross-linking component such as a divinyl benzene unit, an allyl acrylate unit or a butylene glycol diacrylate unit in addition to these components.

More preferable concrete examples of the rubber layer include: rubbers made of a polymerized component of an acrylic component such as an ethyl acrylate unit or a butyl acrylate unit; rubbers made of a polymerized component of a silicone component such as a dimethyl siloxane unit or a phenyl methyl siloxane unit; and their combinations, i.e., rubbers made of a copolymerized component of an acrylic component such as an ethyl acrylate unit or a butyl acrylate unit and a silicone component such as a dimethyl siloxane unit or a phenyl methyl siloxane unit. Most preferable for the rubber layer are rubbers made of a polymerized component of an acrylic component such as an ethyl acrylate unit or a butyl acrylate unit.

According to an embodiment of the invention, in order to achieve the significant impact resistance, it is preferable to contain a glycidyl group in an outermost layer of the core shell-type rubber. The core shell-type rubber containing the glycidyl group in the outermost layer is not specifically limited. A glycidyl group-containing compound contained in the outermost layer may be a polymer of a glycidyl group-containing vinyl unit. Concrete examples of the glycidyl group-containing vinyl unit include glycidyl (meth)acrylate, glycidyl itaconate, diglycidyl itaconate, allyl glycidyl ether, styrene-4-glycidiy ether and 4-glycidyl styrene. In terms of improving the impact resistance, glycidyl (meth)acrylate is most preferably used as the glycidyl group-containing vinyl unit. Any of these units may be used alone, or two or more of these units may be used in combination.

In the core shell-type rubber according to the embodiment of the invention, the shell layers including the outermost layer may additionally contain a polymer having at least one unit selected from unsaturated alkyl carboxylate units, unsaturated dicarboxylic anhydride units, aliphatic vinyl units, aromatic vinyl units, vinyl cyanide units, maleimide units, unsaturated dicarboxylic acid units and other vinyl units, in addition to the above polymer of the glycidyl group-containing vinyl unit. It is especially preferable that a polymer having at least one unit selected from unsaturated alkyl carboxylate units and unsaturated dicarboxylic anhydride units is contained in the shell layers including the outermost layer.

The unsaturated alkyl carboxylate unit is not specifically limited, but alkyl (meth)acrylates are preferably used. Concrete examples of the alkyl (meth)acrylate as the unsaturated alkyl carboxylate unit include methyl (meth)acrylate, ethyl (meth)acrylate, n-propyl (meth)acrylate, n-butyl (meth)acrylate, t-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, phenyl (meth)acrylate, benzyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate" 2,3,4,5-tetrahydroxypentyl (meth)acrylate, amino ethyl acrylate, propyl amino ethyl acrylate, dimethyl amino ethyl methacrylate, ethyl amino propyl methacrylate, phenyl amino ethyl methacrylate and cyclohexyl amino ethyl methacrylate. In terms of the significant effect of improving the impact resistance, methyl (meth)acrylate is preferably used as the unsaturated alkyl carboxylate unit. Any of these units may be used alone, or two or more of these units may be used in combination.

Examples of the unsaturated dicarboxylic anhydride unit include maleic anhydride, itaconic anhydride, glutaconic anhydride, citraconic anhydride and aconitic acid. In terms of the significant effect of improving the impact resistance, maleic anhydride is preferably used as the unsaturated dicarboxylic anhydride unit. Any of these units may be used alone, or two or more of these units may be used in combination.

Examples of the aliphatic vinyl unit include ethylene, propylene and butadiene. Examples of the aromatic vinyl unit include styrene, α-methylstyrene, 1-vinylnaphthalene, 4-methylstyrene, 4-propylstyrene, 4-cyclohexylstyrene, 4-dodecylstyrene, 2-ethyl-4-benzylstyrene, 4-(phenylbutyl)styrene and halogenated styrenes. Examples of the vinyl cyanide unit include acrylonitrile, methacrylonitrile and ethacrylonitrile. Examples of the maleimide unit include maleimide, N-methylmaleimide, N-ethylmaleimide, N-propylmaleimide, N-isopropylmaleimide, N-cyclohexylmaleimide, N-phenylmaleimide, N-(p-bromophenyl)maleimide and N-(chlorophenyl)maleimide. Examples of the unsaturated dicarboxylic acid unit include maleic acid, monoethyl maleate, itaconic acid and phthalic acid. Examples of another vinyl unit include acrylamide, methacrylamide, N-methylacrylamide, butoxymethylacrylamide, N-propylmethacrylamide, N-vinyldiethylamine, N-acetylvinylamine, allylamine, methallylamine, N-methylallylamine, p-aminostyrene, 2-isopropenyl oxazoline, 2-vinyl oxazoline, 2-acroyl oxazoline and 2-styryl oxazoline. Any of these units may be used alone, or two or more of these units may be used in combination.

Preferable concrete examples of the core shell-type rubber according to the embodiment of the invention include: (i) core shell-type rubber having the core layer made of a butyl acrylate polymer and the outermost layer made of methyl methacrylate or a methyl methacrylate/ glycidyl methacrylate copolymer; and (ii) core shell-type rubber having the core layer made of a dimethyl siloxane/ butyl acrylate copolymer and the outermost layer made of methyl methacrylate or a methyl methacrylate/ glycidyl methacrylate copolymer.

The particle diameter of the core shell-type rubber according to the embodiment of the invention is not specifically limited. The primary particle diameter of the core shell-type rubber is, however, preferably 0.05 to 1 µm, more preferably 0.1 to 0.8 µm and most preferably 0.2 to 0.6 µm.

In the core shell-type rubber according to the embodiment of the invention, the weight ratio of the core layer to the shell layer is not specifically limited. The weight ratio of the core layer to the entire core shell-type rubber is, however, preferably 50 to 95 parts by weight, more preferably 55 to 93 parts by weight and most preferably 60 to 90 parts by weight.

The core shell-type rubber according to the embodiment of the invention may be a commercially available product that meets the conditions described above or may be manufactured by a known method.

Examples of the commercially available product include "METABLEN" manufactured by MITSUBISHI RAYON CO., LTD., "Kane Ace" manufactured by KANEKA CORPORATION, "PARALOID" manufactured by ROHM AND HAAS COMPANY, "Staphyloid" manufactured by Takeda Pharmaceutical Company Limited and "Paraface" manufactured by KURARAY CO., LTD. Any of these commercially available products may be used alone, or two or more of these commercially available products may be used in combination.

Additionally, when the thermoplastic resin including the polylactic acid resin (A) according to the embodiment of the invention includes both the polylactic acid resin (A-1) and the thermoplastic resin other than polylactic acid resin (A-2), one preferable aspect may further add a compatibilizing agent. The "compatibilizing agent" herein is an agent that lowers the surface tension of the polylactic acid resin (A-1) and the thermoplastic resin other than polylactic acid resin (A-2) and improves the compatibility between these two components, thereby enhancing the impact resistance and the heat resistance.

Available example of the compatibilizing agent according to the embodiment of the invention include a high-molecular compound grafted or copolymerized with a glycidyl compound or an acid anhydride and a high-molecular compound including an acrylic resin unit or a styrene resin unit by grafting. Any of these compounds usable as the compatibilizing agent may be used alone, or two or more of these compounds may be used in combination.

The mixing amount of the compatibilizing agent according to the embodiment of the invention is preferably 0.5 parts by weight to 30 parts by weight relative to 100 parts by weight of the thermoplastic resin including the polylactic acid resin (A), is more preferably 0.8 parts by weight to 25 parts by weight and especially preferably 1 part by weight to 20 parts by weight.

Available examples of the glycidyl compound used for the above high-molecular compound grafted or copolymerized with the glycidyl compound or the acid anhydride include: (i) glycidyl esters of unsaturated organic acids such as glycidyl acrylate, glycidyl methacrylate, glycidyl ethacrylate and glycidyl itaconate; and (ii) glycidyl ethers such as ally glycidyl ether and their derivatives (e.g., 2-methylglycidyl methacrylate). Among them, glycidyl acrylate and glycidyl methacrylate are preferably used as the glycidyl compound used for the high-molecular compound grafted or copolymerized with the glycidyl compound or the acid anhydride. Any of these glycidyl compounds may be used alone, or two or more of these glycidyl compounds may be used in combination.

Maleic anhydride, for example, is preferably used as the acid anhydride.

The amount used of the glycidyl compound or the acid anhydride to be grafted or copolymerized with the high-molecular compound is not specifically limited, but is preferably 0.05 to 20% by weight and is more preferably 0.1 to 15% by weight relative to the high-molecular compound.

The high-molecular compound grafted or copolymerized with the glycidyl compound or the acid anhydride is not specifically limited but indicates polymers obtained by including the above glycidyl compound or acid anhydride by grafting or copolymerization in, for example, acrylonitrile/ styrene, a vinyl copolymer, a polyamide resin or a polyester resin. One selected among these polymers or two or more selected among these polymers may be used as the high-molecular compound grafted or copolymerized with the glycidyl compound or the acid anhydride. Concrete examples include acrylonitrile/ styrene/ glycidyl methacrylate, ethylene/ propylene -g- maleic anhydride, ethylene/ glycidyl methacrylate, ethylene ethyl acrylate -g- maleic anhydride and ethylene/ butene-1 -g- maleic anhydride. Herein the symbol "/" represents copolymerization and "-g-" represents grafting.

The above "high-molecular compound including the acrylic resin unit or the styrene resin unit by grafting" indicates a polymer including at least one of the acrylic resin unit and the styrene resin unit as the branched chain of a graft copolymer. In this application, available examples of the polymer as the main chain include polyolefins, polystyrenes, acrylic resins and polycarbonate resins.

As other available examples of the compatibilizing agent, poly(methyl methacrylate) -g- polyester and methyl methacrylate/ glycidyl methacrylate -g- polyester are also used preferably.

When the thermoplastic resin other than polylactic acid resin (A-2) is the polycarbonate resin, preferable concrete examples of the compatibilizing agent include polyethylene/ glycidyl methacrylate, methyl methacrylate/ glycidyl methacrylate -g- polyester, poly(ethylene/ glycidyl methacrylate) -g-poly(methyl methacrylate) (E/GMA-g-PMMA), poly(ethylene/ glycidyl methacrylate) -g- polystyrene (E/GMA-g-PS), poly(ethylene/ glycidyl methacrylate) -g- AS (E/GMA-g-AS), polycarbonate -g- poly(methyl methacrylate) (PC-g-PMMA), polycarbonate -g- poly(methyl methacrylate/ glycidyl methacrylate) (PC-g-PMMA/GMA), polycarbonate -g- polystyrene (PC-g-PS), polycarbonate -g- polystyrene (PC-g-PS), polycarbonate -g-polystyrene/ maleic anhydride (PC-g-PS/MAH), polycarbonate -g-polystyrene/ glycidyl methacrylate (PC-g-PS/GMA), polycarbonate -g- AS (PC-g-AS), polycarbonate -g- AS/ maleic anhydride (PC-g-AS/MAH) and polycarbonate -g- AS/ glycidyl methacrylate (PC-g-AS/GMA). More preferable concrete examples of the compatibilizing agent include polyethylene/ glycidyl methacrylate, methyl methacrylate/ glycidyl methacrylate -g- polyester, poly(ethylene/ glycidyl methacrylate) -g-poly(methyl methacrylate) (E/GMA-g-PMMA) and polycarbonate -g-poly(methyl methacrylate/ glycidyl methacrylate) (PC-g-PMMA/GMA).

The thermoplastic resin composition according to the embodiment of the invention may further contain a fibrous reinforcing material, in order to improve the heat resistance or more specifically the heat distortion temperature.

Any of fibrous reinforcing materials generally used for reinforcement of thermoplastic resins may be used as the fibrous reinforcing material. Concrete examples include: inorganic fibrous reinforcing materials such as glass fibers, asbestos fibers, carbon fibers, graphite fibers, metal fibers, potassium titanate whiskers, aluminum borate whiskers, magnesium whiskers, silicon whiskers, wollastonite, sepiolite, asbestos, slag fibers, zonolite, ellestadite, gypsum fibers, silica fibers, silica-alumina fibers, zirconia fibers, boron nitride fibers, silicon nitride fibers and boron fibers; and organic fibrous reinforcing materials such as polyester fibers, nylon fibers, acrylic fibers, regenerated cellulose fibers, acetate fibers, kenaf, bamboo, ramie, cotton, jute, hemp, sisal, flax, linen, silk, Manila hemp, sugar cane, wood pulp, wastepaper, used paper and wool. Among these fibrous reinforcing materials, the inorganic fibrous reinforcing materials are preferable. Especially glass fibers, aluminum borate whiskers and wollastonite are preferable as the fibrous reinforcing material. Using the organic fibrous reinforcing material is also preferable. In terms of making use of the biodegradability of the polylactic acid resin (A-1), natural fibers and regenerated fibers are more preferable as the fibrous reinforcing material, and kenaf and used paper are especially preferable. Additionally, in terms of improving the heat distortion temperature, the aspect ratio (mean fiber length/ mean fiber diameter) of the fibrous reinforcing material to be added is preferably not less than 5, is more preferably not less than 10 and is most preferably not less than 20.

The above fibrous reinforcing material may be coated or bound with a thermoplastic resin such as an ethylene/ vinyl acetate copolymer or with a thermosetting resin such as an epoxy resin or may be treated with a coupling agent such as aminosilane or epoxy silane.

The mixing amount of the above fibrous reinforcing material is preferably 0.1 to 200 parts by weight relative to 100 parts by weight of the thermoplastic resin including the polylactic acid resin (A) and is more preferably 0.5 to 100 parts by weight.

The thermoplastic resin composition according to the embodiment of the invention may further contain one or more of carbon black, titanium oxide, red iron oxide, ultramarine, titanium yellow and various other color pigments and dyes to tone the resin to various colors and improve the weather resistance (light resistance) and the electrical conductivity.

When any of the above pigments and dyes is added to the thermoplastic resin composition according to the embodiment of the invention, its mixing amount is 0.01 to 10 parts by weight relative to 100 parts by weight of the thermoplastic resin including the polylactic acid resin (A), is preferably 0.02 to 9 parts by weight and is more preferably 0.03 to 8 parts by weight.

The above carbon black is not specifically limited but may be, for example, channel black, furnace black, acetylene black, anthracene black, lamp black, soot black or graphite. Carbon black having the average particle diameter of not greater than 500 nm and the dibutyl phthalate oil absorption of 50 to 400 cm³/100 g is preferably used as the carbon black. The carbon black may be treated with a treatment agent, such as aluminum oxide, silicon oxide, zinc oxide, zirconium oxide, a polyol or a silane coupling agent.

Titanium oxide having the crystal form of rutile type or anatase type and the average particle diameter of not greater than 5 µm is preferably used as the above titanium oxide. The titanium oxide may be treated with a treatment agent, such as aluminum oxide, silicon oxide, zinc oxide, zirconium oxide, a polyol or a silane coupling agent. Any of the above carbon black, titanium oxide and various other color pigments and dyes may be provided in the form of a melt-blended or simply-blended material mixture with any of various thermoplastic resins, in order to improve the dispersibility of the pigment or dye in the thermoplastic resin composition according to the embodiment of the invention and improve the handling property of the pigment or dye during manufacturing. As this thermoplastic resin, polyester resins such as polylactic acid resins are preferably used, and polylactic acid resins are especially preferably used.

In terms of improving the hydrolysis resistance of the polylactic acid resin (A-1), the thermoplastic resin composition according to the embodiment of the invention may further include a carbodiimide compound. As the carbodiimide compound, it is preferable to use at least one compound selected from carbodiimide compounds such as N,N'-di-2,6-diisopropylphenylcarbodiimide, 2,6,2',6'-tetraisopropyldiphenylcarbodiimide and a polycarbodiimide, and the polycarbodiimide is most preferable. The polycarbodiimide used may be, for example, a polymer or a copolymer using at least one selected among polyvalent isocyanate compounds. Concrete examples of the polyvalent isocyanate include hexamethylene diisocyanate, xylene diisocyanate, cyclohexane diisocyanate, pyridine diisocyanate, 2,4-tolylene diisocyanate, 2,6-tolylene diisocyanate, 4,4-diphenylmethane diisocyanate, p-phenylene diisocyanate, m-phenylene diisocyanate and 1,5-naphthylene diisocyanate.

The mixing amount of the above carbodiimide compound is preferably 0.01 to 10 parts by weight relative to 100 parts by weight of the thermoplastic resin including the polylactic acid resin (A), is more preferably 0.05 to 9 parts by weight and is most preferably 0.1 to 8 parts by weight.

The thermoplastic resin composition according to the embodiment of the invention may additionally contain an additive as needed basis in such a range that does not interfere with the object of the embodiment of the invention: for example, stabilizers (e.g., hindered phenol antioxidants, phosphorus antioxidants, amine antioxidants, sulfur antioxidants, light stabilizers, UV absorbers and copper inhibitors), mold release agents (fatty acids, fatty acid metal salts, hydroxy fatty acids, fatty acid esters, partially-saponified aliphatic esters, paraffins, low molecular-weight polyolefins, fatty acid amides, alkylene bis(fatty acid amide)s, aliphatic ketones, lower alcohol esters of fatty acids, polyol esters of fatty acids, polyglycol esters of fatty acids and modified silicones).

The production method of the thermoplastic resin composition according to the embodiment of the invention is not specifically limited. A production technique using a heating melting kneader, such as an extruder or a kneader is preferable, and a production technique using an extruder is more preferable. The extruder may be, for example, a single-screw extruder, a twin-screw extruder, a tri- or more multi-screw extruder or a twin-screw, single-screw complex extruder. In terms of the kneading performance and the convenience, the twin-screw extruder is preferable.

For example, a preferable production method simultaneously feeds the polylactic acid resin (A-1) and optionally the thermoplastic resin other than polylactic acid resin (A-2) and the flame retardant (B) and other additives as needed basis to a melting kneader, for example, an extruder, from a raw material supply port of the melting kneader and heats and melt-kneads the material mixture. Another preferable method separately feeds the raw materials from a side feeder attached to the melting kneader and heats and melt-kneads the material mixture.

The cylinder temperature in the process of melt kneading is not specifically limited but may be any temperature in a range that melts the thermoplastic resin including the polylactic acid resin (A) used according to the embodiment of the invention. The cylinder temperature is preferably 150°C to 300°C, is more preferably 160°C to 290°C and is furthermore preferably 170°C to 280°C.

The thermoplastic resin composition according to the embodiment of the invention may be processed and applied to any of various product shapes by a technique, for example, extrusion molding, injection molding, blow molding or spinning to various fibers such as undrawn yarns, drawn yarns and superdrawn yarns. The thermoplastic resin composition according to the embodiment of the invention may be used as molded products in various applications of, for example, machine mechanical components, electric and electronic components, automobile components, optical devices, building and civil engineering components and commodities, and are especially preferably used as molded products of machine mechanical components, electric and electronic components and automobile components.

The extrusion molded product produced by extrusion molding described above may be any of extrusion molded products such as strands, films, inflation films, sheets, tubes and bars in various shapes such as round bars. The thermoplastic resin composition according to the embodiment of the invention may be used in a stretched or drawn form and may be further processed and used as any of molded products in various applications of, for example, machine mechanical components, electric and electronic components, automobile components, optical devices, building components and commodities.

The above machine mechanical components include cleaning jigs, various bearings including oilless bearings, stern bearings and submerged bearings, motor components, lighters and typewriters.

The above electric and electronic components include housings of electrical machinery and apparatus, housings of OA equipment, various covers and housings, various gears, various cases, sensors, LED lamps, connectors, sockets, resistors, relay cases, switches, coil bobbins, capacitors, variable capacitor cases, optical pickups, oscillators, various terminal strips and boards, transformers, breakers, plugs, printed circuit boards, tuners, speakers, microphones, headphones, small motors, magnetic head bases, power modules, semiconductors, liquid crystals, FDD carriages, FDD chassis, motor brush holders, parabola antennas, CD trays, cartridges, cassettes, sorters, AC adapters, charging stands, switchboards, socket covers, telephone components, facsimile components, copying machine components, housings and internal components of personal computers, housings and internal components of CRT displays, housings and internal components of liquid crystal displays, housings and internal components of printers, housings and internal components of portable terminals such as cell phones and handheld mobile devices, housings and internal components of recording medium drives (e.g., CD, DVD, PD and FDD), housings and internal components of copying machines, housings and internal components of facsimiles, video tape recorder components, TV set components, irons, hair dryers, rice cooker components, microwave oven components, acoustic components, video cameras, audio equipment components for audios, laserdiscs (registered trademark) and compact disks, lighting components, refrigerator components, air conditioner components, typewriter components, word processor components, housings and internal components of electronic instruments, home game machines and portable game machines, and parabola antennas.

The above automobile components include interior components, exterior components and underhood components and more specifically include instrument panels, trims, torque control levers, seat belt components, resistor blades, windshield washer levers, window regulator handles, window regulator handle knobs, passing light levers, sun visor brackets, console boxes, trunk covers, spare tire covers, ceiling materials, floor materials, inner plates, sheet materials, door panels, door boards, steering wheels, rearview mirror housings, air duct panels, windshield molding fasteners, speed cable liners, sun visor brackets, speedometer cable liners, sun visor brackets, head restraint rod holders, various motor housings, various plates, various panels, roof rails, dashboards, fenders, garnishes, bumpers, bumper corners, bumper skirts, radiator grilles, hoods, door mirror stays, spoilers, hood louvers, wheel covers, wheel caps, grille apron cover frames, lamp reflectors, lamp bezels, door handles, door panels, side mirror housings, center pillars, air outlet louvers, emblems, exterior trim moldings, slide roofs, rear lamp rims, precision machine components, alternator terminals, alternator connectors, IC regulators, various valves including emission valves, various pipes for fuel, exhaust system, and air intake system, air intake nozzle snorkels, engine coolant joints, carburetor main bodies, carburetor spacers, emission sensors, coolant sensors, oil temperature sensors, brake pad wear sensors, throttle position sensors, crankshaft position sensors, air flowmeters, thermostat bases for air conditioners, hot air flow control valves, radiator grilles, brush holders for radiator motors, water pump impellers, wiper motor components, distributors, starter switches, starter relays, transmission wire harnesses, windshield washer fluid nozzles, air conditioner panel switch plates, fuel solenoid valve coils, fuse connectors, horn terminals, electric component insulators, step motor rotors, lamp sockets and solenoid bobbins.

The above optical devices include components of microscopes, binoculars, cameras, watches and displays.

The blow molded products are those molded and processed to required shapes for bellows, boots, bottles and tubes and cylinders with different diameters and may be used in various applications as molded products of, for example, machine mechanical components, electric and electronic components, automobile components, optical devices, building components and commodities.

### Examples

The following describes the embodiments of the invention in more detail with reference to examples. The embodiments of the invention are, however, not limited to these examples.

The raw materials used in respective examples of the invention are listed below:
(A-1-1) polylactic acid resin: polylactic acid resin wherein the D-isomer is 1.4% and the weight-average molecular weight of PMMA equivalent measured by GPC is 160 thousand;
(A-2-1) polycarbonate resin: "TARFLON A1900" manufactured by Idemitsu Kosan Co., Ltd.;
(A-2-2) polybutylene succinate adipate: "Bionolle #3001" manufactured by Showa Denko K.K.;
(B-1-1) aluminum hydroxide: "ALH" manufactured by KAWAI LIME INDUSTRY Co., Ltd., mixture of gibbsite type and bayerite type;
(B-1-2) aluminum hydroxide: "B703" manufactured by Nippon Light Metal Company, Ltd., gibbsite type;
(B-2-1) condensed phosphate ester-based flame retardant: "PX-200" manufactured by DAIHACHI CHEMICAL INDUSTRY CO., LTD.;
(B-2-2) polyphosphate salt-based flame retardant: "FP-2200" manufactured by ADEKA CORPORATION;
(C-1) low melting point glass powder: "XF105" manufactured by Johnson Matthey Plc., median diameter of 4.5 µm, softening temperature of 500°C;
(C-2) low melting point glass powder: "RU8215" manufactured by Johnson Matthey Plc., median diameter of 3.5 µm, softening temperature of 500°C;
(C-3) low melting point glass powder: "B200M" manufactured by AR BROWN Co., Ltd., median diameter of 5.5 µm, softening temperature of 350°C;
(C-4) low melting point glass powder: "B200" manufactured by AR BROWN Co., Ltd., median diameter of 30 µm, softening temperature of 350°C;
(C'-1) high melting point glass powder: "ASF102M" manufactured by Asahi Glass Co., Ltd., median diameter of 3.5 µm, softening temperature of 800°C;
(D-1) talc: "P-6" manufactured by Nippon Talc Co., Ltd.;
(E-1) polyethylene glycol plasticizer: "Pluronic F68" manufactured by ADEKA CORPORATION;
(F-1) epoxy silane coupling agent: "KBM-403" manufactured by Shin-Etsu Chemical Co., Ltd.;
(G-1) glycidyl group-containing core shell-type rubber: "PARALOID EXL2314" manufactured by ROHM AND HAAS COMPANY, and
(H-1) Compatibilizing agent: "Bondfast E" manufactured by Sumitomo Chemical Company, Limited.

### <Examples 1 to 17, Comparative Examples 1 to 4>

The raw materials shown in Tables 1 to 3 were mixed at the mixing ratio shown in Tables 1 to 3 and were fed from a raw material supply port of a twin-screw extruder with vent "TEX30α" (manufactured by the Japan Steel Works, LTD.) having the screw diameter of 30 mmφ and the ratio L/D of the screw length L to the screw diameter D equal to 45.5. The material mixture was melt-kneaded under the conditions of the set temperature of 210°C, the screw rotation speed of 200 rpm and the feed rate of 15 kg/h and was pelletized with a pelletizer to obtain pellets of a thermoplastic resin composition. The pellets were subjected to evaluations (1) to (4) described below:

### (1) Evaluation of Flame Retardancy (UL-94 flame test)

The pellets produced according to the respective conditions were dried with hot air at 80°C for 8 hours and were subsequently subjected to injection molding using an injection molding machine (SG75H-MIV manufactured by Sumitomo Heavy Industries, Ltd.) under the conditions of the cylinder temperature of 210°C and the mold temperature of 80°C. Test pieces of 127 mm x 12.7 mm x 1.6 mm thick and 0.8 mm thick were obtained as molded products. Firing test was performed in conformity with the vertical flame test of U.S. UL standard subject 94 (UL-94) for evaluation of the flame retardancy. The evaluation level was shown in four stages, V-0, V-1, V-2 and out-of-standard in the descending order of the flame retardancy.

### (2) Molding Processability (injection molding cycle in the injection molding process)

The pellets produced according to the respective conditions were dried with hot air at 80°C for 8 hours and were subsequently subjected to injection molding using an injection molding machine (SG75H-MIV manufactured by Sumitomo Heavy Industries, Ltd.) under the conditions of the cylinder temperature of 210°C and the mold temperature of 80°C. For evaluation of the molding processability of the thermoplastic resin composition, the shortest time when a non-deformed, solidified, molded product was taken out of the mold by thrusting with thrust pins, was measured as the "injection molding cycle". The shorter injection molding cycle indicates the better molding processability. The molded product herein means a tensile test piece subjected to the tensile test.

### (3) Evaluation of Heat Resistance (deflection temperature under load in low-load (0.45 MPa) DTUL measurement)

The pellets produced according to the respective conditions were dried with hot air at 80°C for 8 hours and were subsequently subjected to injection molding using an injection molding machine (SG75H-MIV manufactured by Sumitomo Heavy Industries, Ltd.) under the conditions of the cylinder temperature of 210°C and the mold temperature of 80°C. A molded product of 12.7 mm x 127 mm x 3.2 mm was then obtained. The deflection temperature under load (DTUL) under the low-load condition (0.45 MPa) was measured for this molded product in conformity with ASTM D648.

### (4) Evaluation of Impact Resistance (notched izod impact strength)

The pellets produced according to the respective conditions were dried with hot air at 80°C for 8 hours and were subsequently subjected to injection molding using an injection molding machine (SG75H-MIV manufactured by Sumitomo Heavy Industries, Ltd.) under the conditions of the cylinder temperature of 210°C and the mold temperature of 80°C. A molded product in a notched slip shape of 3.2 mm thickness was obtained, and izod impact strength was measured for this molded product in conformity with ASTM D256.

**[Table 1]**

| | | EX 1 | EX 2 | EX 3 | EX 4 | EX 5 | EX 6 | EX 7 | EX 8 | EX 9 |
|---|---|---|---|---|---|---|---|---|---|---|
| (A) Thermoplastic Resin including Polylactic Acid Resin | type | A-1-1 | A-1-1 | A-1-1 | A-1-1 | A-1-1 | A-1-1 | A-1-1 | A-1-1 | A-1-1 |
| | parts by weight | 100 | 100 | 100 | 100 | 100 | 100 | 100 | 100 | 100 |
| (B) Flame Retardant | type | B-1-1 | B-1-1 | B-1-1 | B-1-1 | B-1-1 | B-1-1 | B-1-1 | B-1-2 | B-2-1 |
| | parts by weight | 20 | 20 | 20 | 15 | 12.5 | 10 | 40 | 20 | 20 |
| (C) Low Melting Point Glass Powder | type | C-1 | C-1 | C-1 | C-1 | C-1 | C-1 | C-1 | C-1 | C-1 |
| | parts by weight | 5 | 5 | 5 | 10 | 12.5 | 5 | 5 | 5 | 5 |
| (D) Crystal Nucleating Agent | type | - | D-1 | D-1 | D-1 | D-1 | D-1 | D-1 | D-1 | D-1 |
| | parts by weight | - | 2 | 10 | 10 | 10 | 10 | 10 | 10 | 10 |
| (E) Plasticizer | type | - | E-1 | E-1 | E-1 | E-1 | E-1 | E-1 | E-1 | E-1 |
| | parts by weight | - | 5 | 5 | 5 | 5 | 5 | 5 | 5 | 5 |
| Median Diameter (D50) of (C) Low Melting-Point Glass | µm | 4.5 | 4.5 | 4.5 | 4.5 | 4.5 | 4.5 | 4.5 | 4.5 | 4.5 |
| Softening Temperature of (C) Low Melting Point Glass | °C | 500 | 500 | 500 | 500 | 500 | 500 | 500 | 500 | 500 |
| Mixing Ratio (B)/(C) | | 80/20 | 80/20 | 80/20 | 60/40 | 50/50 | 67/33 | 89/11 | 80/20 | 80/20 |
| Flame Retardancy (UL94 1.6 mm t) | flame level | V-0 | V-0 | V-0 | V-0 | V-1 | V-2 | V-2 | V-0 | V-2 |
| Flame Retardancy (UL 94 0.8 mm t) | flame level | V-0 | V-0 | V-0 | V-0 | V-1 | V-2 | V-2 | V-0 | V-2 |
| Injection Molding Cycle | seconds | >300 | 90 | 60 | 60 | 60 | 60 | 60 | 60 | 60 |
| Deflection Temperature Under Load (low load: 0.45 MPa) | °C | 60 | 118 | 120 | 119 | 118 | 110 | 122 | 114 | 106 |
| Izod Impact Strength | J/m | 30 | 30 | 30 | 25 | 20 | 22 | 18 | 25 | 20 |

| | | | | | | | | | | |
|---|---|---|---|---|---|---|---|---|---|---|
| (A-1-1) polylactic acid resin: polylactic acid resin wherein the D-isomer is 1.4% and the weight-average molecular weight of PMMA equivalent measured by GPC is 160 thousand (B-1-1) aluminum hydroxide: "ALH" manufactured by KAWAI LIME INDUSTRY Co., Ltd., mixture of gibbsite type and bayerite type (B-1-2) aluminum hydroxide: "B703" manufactured by Nippon Light Metal Company, Ltd., gibbsite type (B-2-1) condensed phosphate ester-based flame retardant: "PX-200" manufactured by DAIHACHI CHEMICAL INDUSTRY CO., LTD. (C-1) low melting point glass powder: "XF105" manufactured by Johnson Matthey Plc., median diameter of 4.5 µm, softening temperature of 500°C (D-1) talc: "P-6" manufactured by Nippon Talc Co., Ltd. (E-1) polyethylene glycol plasticizer "Pluronic F68" manufactured by ADEKA CORPORATION | | | | | | | | | | |

**[Table 2]**

| | | EX 10 | EX 11 | EX 12 | EX 13 | Ex 14 | EX 15 | EX 16 | EX 17 |
|---|---|---|---|---|---|---|---|---|---|
| (A) Thermoplastic Resin including Polylactic Acid Resin (B) Flame Retardant | type | A-1-1 | A-1-1 | A-1-1 | A-1-1 | A-1-1 | A-1-1 | A-1-1 | A-1-1 |
| | parts by weight | 100 | 100 | 100 | 100 | 100 | 50 | 50 | 50 |
| | type | - | - | - | - | - | A-2-1 | A-2-1 | A-2-2 |
| | parts by weight | - | - | - | - | - | 50 | 50 | 50 |
| | type | B-2-2 | B-1-1 | B-1-1 | B-1-1 | B-1-1 | B-1-1 | B-1-1 | B-1-1 |
| | parts by weight | 20 | 20 | 20 | 20 | 20 | 20 | 20 | 20 |
| (C) Low Melting Point Glass Powder | type | C-1 | C-2 | C-3 | C-1 | C-1 | C-1 | C-1 | C-1 |
| | parts by weight | 5 | 5 | 5 | 5 | 5 | 5 | 5 | 5 |
| (D) Crystal Nucleating Agent | type | D-1 | D-1 | D-1 | D-1 | D-1 | D-1 | D-1 | D-1 |
| | parts by weight | 10 | 10 | 10 | 10 | 10 | 10 | 10 | 10 |
| (E) Plasticizer | type | E-1 | E-1 | E-1 | E-1 | E-1 | E-1 | E-1 | E-1 |
| | parts by weight | 5 | 5 | 5 | 5 | 5 | 5 | 5 | 5 |
| (F) Silane Coupling Agent | type | - | - | - | - | - | - | - | - |
| | parts by weight | - | - | - | - | - | - | - | - |
| (G) Impact Modifter | type | - | - | - | - | G-1 | - | - | - |
| | parts by weight | - | - | - | - | 10 | - | - | - |
| (H), Compatibilizing Agent | type | - | - | - | - | - | - | H-1 | - |
| | parts by weight | - | - | - | - | - | - | 10 | - |
| Median Diameter (D50) of (C) Low Melting-Point Glass | µm | 4.5 | 3.5 | 5.5 | 4.5 | 4.5 | 4.5 | 4.5 | 4.5 |
| Softening Temperature of (C) Low Melting Point Glass | °C | 500 | 350 | 350 | 4.5 500 | 500 | 500 | 500 | 500 |
| Mixing Ratio (B)/(C) | | 80/20 | 80/20 | 80/20 | 80/20 | 80/20 | 80/20 | 80/20 | 80/20 |
| Flame Retardancy (UL94 1.6 mm t) | flame level | V-2 | V-0 | V-0 | V-0 | V-2 | V-2 | V-2 | V-2 |
| Flame Retardancy (UL 94 0.8 mm t) | flame level | V-2 | V-0 | V-0 | V-0 | V-2 | V-2 | V-2 | V-2 |
| Injection Molding Cycle | seconds | 60 | 60 | 60 | 60 | 60 | 60 | 60 | 90 |
| Deflection Temperature Under Load (low load: 0.45 MPa) | °C | 110 | 133 | 118 | 131 | 103 | 105 | 121 | 101 |
| Izod Impact Strength | J/m | 18 | 37 | 28 | 35 | 38 | 20 | 32 | 38 |

| | | | | | | | | | |
|---|---|---|---|---|---|---|---|---|---|
| (A-1-1) polylactic acid resin: polylactic acid resin wherein the D-isomer is 1.4% and the weight-average molecular weight of PMMA equivalent measured by GPC is 160 thousand (A-2-1) polycarbonate resin: TARFLON A1900" manufactured by Idemitsu Kosan Co., Ltd. (A-2-2) polybutylene, succinate adipate: "Bionolle #3001" manufactured by Shows Denko K.K. , (B-1-1) aluminum hydroxide: "ALH" manufactured by KAWAI LIME INDUSTRY Co., Ltd., mixture of gibbsite type and bayerite type (B-2-2) polyphosphate salt-based flame retardants "FP-2200" manufactured by ADEKA CORPORATION (C-1) low melting point glass powder: "XF105" manufactured by Johnson Matthey Plc., median diameter of 4.5 µm, softening temperature of 500°C (C-2) low melting point glass powder "RU8215" manufactured by Johnson Matthey Plc., median diameter of 3.5 µm, softening temperature of 500°C (C-3) low melting point glass powder: "8200M" manufactured by AR, BROWN Co., Ltd., median diameter of 5.5 µm, softening temperature of 350°C (D-1) talc: "P-6" manufactured by Nippon Talc Co., Ltd. (E-1) polyethylene glycol plasticizer "Pluronic F68" manufactured by ADEKA CORPORATION (F-1) epoxy silane coupling agent "KBM-403" manufactured by Shin-Etsu Chemical Co., Ltd. (G-1) glycidyl group-containing core shell-type rubber: "PARALOID EXL2314" manufactured by ROHM AND HAAS COMPANY (N-1) Compatibilizing agent: "Bondfast E" manufactured by Sumitomo Chemical Company, Limited | | | | | | | | | |

**[Table 3]**

| | | COMP EX 1 | COMP EX 2 | COMP EX 3 | COMP EX 4 |
|---|---|---|---|---|---|
| (A) Thermoplastic Resin Including Polylactic Acid Resin | type | A-1-1 | A-1-1 | A-1-1 | A-1-1 |
| | parts by weight | 100 | 100 | 100 | 100 |
| (B) Flame Retardant | type | B-1-1 | - | B-1-1 | B-1-1 |
| | parts by weight | 20 | - | 20 | 20 |
| (C) Low Meriting Point Glass Powder | type | - | C-1 | C-4 | - |
| | parts by weight | - | 20 | 5 | - |
| (C') High Melting Point Glass Powder | type | - | - | - | C'-1 |
| | parts by weight | - | - | - | 5 |
| (D) Crystal Nucleating Agent | type | D-1 | D-1 | D-1 | D-1 |
| | parts by weight | 10 | 10 | 10 | 10 |
| (E) Plasticizer | type | E-1 | E-1 | E-1 | E-1 |
| | parts by weight | 5 | 5 | 5 | 5 |
| Median Diameter (D50) of (C) Low Melting-Point Glass | µm | - | 45 | 30 | 3.5 |
| Softening Temperature of (C) Low Melting Point Glass | °C | - | 500 | 350 | 800 |
| Mixing Ratio (B)/(C) | | 100/0 | 0/100 | 80/20 | 80/20 |
| Flame Retardancy (UL94 1.6 mm t) | flame level | out of standard | out of standard | out of standard | out of standard |
| Flame Retardancy (UL 94 0.8 mm t) | flame level | out-of-standard | out-of-standard | out-of-standard | out-of-standard |
| Injection Molding Cycle | seconds | 60 | 60 | 60 | 60 |
| Deflection Temperature Under Load (low load: 0.45 MPa) | °C | 119 | 113 | 116 | 117 |
| Izod Impact Strength | J/m | 15 | 11 | 19 | 18 |

| | | | | | |
|---|---|---|---|---|---|
| (A-1-1) polylactic acid resin: polylactic acid resin wherein the D-isomer is 1.4% and the weight average molecular weight of PMMA equivalent measured by GPC is 160 thousand (B-1-1) aluminum hydroxide: "ALH" manufactured by KAWAI LIME INDUSTRY Co.. Ltd., mixture of gibbsite type and bayerite type (C-1) low melting point glass powder: "XF105" manufactured by Johnson Matthey Plc median diameter of 4.5 µm, softening temperature of 600°C (C-4) low melting point glass powder "B200" manufactured by AR BROWN Co.. Ltd. median diameter of 30 µm softening temperature of 350°C (C'-1) high melting point glass powder. "ASF102M" manufactured by Asahi Glass Co, Ltd., median diameter of 3.5 µm, softening temperature of 800°C (D-1) talc: "P-6" manufactured by Nippon Talc Co., Ltd. (E-1) polyethylene glycol plasticizer; "Pluronic F68" manufactured by ADEKA CORPORATION | | | | | |

The comparison between Example 1 and Examples 2 and 3 shows that using the crystal nucleating agent and the plasticizer in combination, in addition to the combined used of the flame retardant and the low melting point glass powder improves the moldability with maintaining the high flame retardancy. Additionally, the comparison between Example 2 and Example 3 shows that increasing the crystal nucleating agent further improves the heat resistance.

The comparison between Example 3 and Comparative Examples 1 and 2 shows that using the flame retardant and the low melting point glass powder in combination significantly improves the flame retardancy and achieves the good balance between the heat resistance and the impact resistance.

The comparison between Examples 3 to 5 shows that controlling the mixing ratio of the flame retardant to the low melting point glass powder significantly improves the flame retardancy and achieves the good balance between the heat resistance and the impact resistance.

The comparison between Examples 3, 11 and 12 and Comparative Examples 3 and 4 shows that controlling the median diameter (D50) of the low melting point glass powder and the softening temperature of the low melting point glass powder significantly improves the flame retardancy and achieves the good balance between the heat resistance and the impact resistance.

The comparison between Examples 3 and 8 and Examples 9 and 10 shows that using the metal hydroxide (B-1-1, B-1-2: aluminum hydroxide) as the flame retardant has the better effect of improving the flame retardancy, compared with the phosphorus-based flame retardant (B-2-1: condensed phosphate ester-based flame retardant, B-2-2: polyphosphate salt flame retardant).

The comparison between Example 3 and Example 13 shows that adding the silane coupling agent improves the heat resistance and the impact resistance with maintaining the flame retardancy.

The comparison between Example 3 and Example 14 shows that adding the impact modifier improves the impact resistance.

The comparison between Examples 3 and 15 and Example 16 shows that the combined use of the polycarbonate and the compatibilizing agent achieves the good balance between the flame retardancy, the heat resistance and the impact resistance.

The comparison between Example 3 and Example 7 shows that adding the aliphatic polyester resin (A-2-2: polybutylene succinate adipate) achieves the good balance between the flame retardancy, the heat resistance and the impact resistance.

## Claims

1. A thermoplastic resin composition, comprising:
100 parts by weight of a thermoplastic resin including a polylactic acid resin (A);
10 to 50 parts by weight of a flame retardant (B); and
1 to 20 parts by weight of low melting point glass powder (C) having a median diameter (D50) in particle size distribution measurement of not greater than 6 µm and a softening temperature of not higher than 600°C.

2. The thermoplastic resin composition according to claim 1, wherein
the flame retardant (B) is at least one flame retardant selected among metal hydroxides and phosphorus-based flame retardants.

3. The thermoplastic resin composition according to claim 2, wherein
the metal hydroxide is at least one selected among aluminum hydroxide, magnesium hydroxide and calcium hydroxide.

4. The thermoplastic resin composition according to claim 3, wherein
the metal hydroxide is aluminum hydroxide.

5. The thermoplastic resin composition according to any one of claims 1 to 4, wherein
a mixing ratio of the flame retardant (B) to the low melting point glass powder (C) (flame retardant (B) / low melting point glass powder (C)) is 60/40 to 90/10 in weight ratio.

6. The thermoplastic resin composition according to any one of claims 1 to 5, further comprising:
0.01 to 50 parts by weight of a crystal nucleating agent (D) relative to 100 parts by weight of the thermoplastic resin including the polylactic acid resin (A).

7. The thermoplastic resin composition according to any one of claims 1 to 6, further comprising:
0.1 to 50 parts by weight of a plasticizer (E) relative to 100 parts by weight of the thermoplastic resin including the polylactic acid resin (A).

8. The thermoplastic resin composition according to any one of claims 1 to 7, further comprising:
0.1 to 10 parts by weight of a silane coupling agent (F) relative to 100 parts by weight of the thermoplastic resin including the polylactic acid resin (A).

9. The thermoplastic resin composition according to claim 8, wherein
the silane coupling agent (F) is an epoxy silane coupling agent.

10. A molded product produced by molding the thermoplastic resin composition according to any one of claims 1 to 9.

## Patentansprüche

1. Thermoplastische Harzzusammensetzung, die Folgendes umfasst:
100 Gewichtsteile eines ein Polymilchsäureharz umfassenden thermoplastischen Harzes (A),
10 bis 50 Gewichtsteile eines Flammschutzmittels (B) und
1 bis 20 Gewichtsteile eines Glaspulvers (C) mit niedrigem Schmelzpunkt und einem mittleren Durchmesser (D50) in einer Teilchengrößenverteilungsmessung von nicht mehr als 6 µm und einer Erweichungstemperatur von nicht mehr als 600 °C.

2. Thermoplastische Harzzusammensetzung nach Anspruch 1, worin das Flammschutzmittel (B) zumindest ein aus Metallhydroxiden und Flammschutzmitteln auf Phosphorbasis ausgewähltes Flammschutzmittel ist.

3. Thermoplastische Harzzusammensetzung nach Anspruch 2, worin das Metallhydroxid zumindest ein aus Aluminiumhydroxid, Magnesiumhydroxid und Calciumhydroxid ausgewähltes Metallhydroxid ist.

4. Thermoplastische Harzzusammensetzung nach Anspruch 3, worin das Metallhydroxid Aluminiumhydroxid ist.

5. Thermoplastische Harzzusammensetzung nach einem der Ansprüche 1 bis 4, worin
das Mischungsverhältnis zwischen Flammschutzmittel (B) und dem Glaspulver mit niedrigem Schmelzpunkt (C) (Flammschutzmittel (B)/Glaspulver mit niedrigem Schmelzpunkt (C)) einem Gewichtsverhältnis von 60/40 bis 90/10 entspricht.

6. Thermoplastische Harzzusammensetzung nach einem der Ansprüche 1 bis 5, das weiters Folgendes umfasst:
0,01 bis 50 Gewichtsteile eines Kristallkeimbildners (D), bezogen auf 100 Gewichtsteile des ein Polymilchsäureharz umfassenden thermoplastischen Harzes (A).

7. Thermoplastische Harzzusammensetzung nach einem der Ansprüche 1 bis 6, die weiters Folgendes umfasst:
0,1 bis 50 Gewichtsteile eines Weichmachers (E), bezogen auf 100 Gewichtsteile des ein Polymilchsäureharz umfassenden thermoplastischen Harzes (A).

8. Thermoplastische Harzzusammensetzung nach einem der Ansprüche 1 bis 7, das weiters Folgendes umfasst:
0,1 bis 10 Gewichtsteile eines Silanhaftvermittlers (F), bezogen auf 100 Gewichtsteile des ein Polymilchsäureharz umfassenden thermoplastischen Harzes (A).

9. Thermoplastische Harzzusammensetzung nach Anspruch 8, worin der Silanhaftvermittler (F) ein Epoxysilanhaftvermittler ist.

10. Formprodukt, das durch Formen einer thermoplastischen Harzzusammensetzung nach einem der Ansprüche 1 bis 9 hergestellt ist.

## Revendications

1. Composition de résine thermoplastique, comprenant :
100 parties en poids d'une résine thermoplastique incluant une résine d'acide poly-lactique (A) ;
10 à 50 parties en poids d'un retardateur de flamme (B) ; et
1 à 20 parties en poids d'une poudre de verre (C) d'un point de fusion bas ayant un diamètre médian (D50) dans une mesure de distribution de taille de particule non supérieur à 6 µm et une température de ramollissement non supérieure à 600 °C.

2. Composition de résine thermoplastique selon la revendication 1, dans laquelle le retardateur de flamme (B) est au moins un retardateur de flamme sélectionné parmi des hydroxydes métalliques et des retardateurs de flamme à base de phosphore.

3. Composition de résine thermoplastique selon la revendication 2, dans laquelle l'hydroxyde métallique est au moins un sélectionné parmi l'hydroxyde d'aluminium, l'hydroxyde de magnésium et l'hydroxyde de calcium.

4. Composition de résine thermoplastique selon la revendication 3, dans laquelle l'hydroxyde de métal est l'hydroxyde d'aluminium.

5. Composition de résine thermoplastique selon l'une quelconque des revendications 1 à 4, dans laquelle
un rapport de mélange du retardateur de flamme (B) à la poudre de verre (C) d'un point de fusion bas (retardateur de flamme (B)/poudre de verre (C) d'un point de fusion bas) est de 60/40 à 90/10 en rapport de poids.

6. Composition de résine thermoplastique selon l'une quelconque des revendications 1 à 5, comprenant en outre :
0,01 à 50 parties en poids d'un agent de nucléation de cristal (D) relativement à 100 parties en poids de la résine thermoplastique incluant la résine d'acide poly-lactique (A).

7. Composition de résine thermoplastique selon l'une quelconque des revendications 1 à 6, comprenant en outre :
0,1 à 50 parties en poids d'un plastifiant (E) relativement à 100 parties en poids de la résine thermoplastique incluant la résine d'acide poly-lactique (A) .

8. Composition de résine thermoplastique selon l'une quelconque des revendications 1 à 7, comprenant en outre :
0,1 à 10 parties en poids d'un agent de couplage de silane (F) relativement à 100 parties en poids de la résine thermoplastique incluant la résine d'acide poly-lactique (A) .

9. Composition de résine thermoplastique selon la revendication 8, dans laquelle l'agent de couplage de silane (F) est un agent de couplage d'époxy silane.

10. Produit moulé produit en moulant la composition de résine thermoplastique selon l'une quelconque des revendications 1 à 9.
